# EUROPEAN PATENT SPECIFICATION

(11) **EP 3 292 977 B1**
(45) Date of publication and mention of the grant of the patent: **08.01.2020**
(21) Application number: 16811255.5
(22) Date of filing: 21.01.2016
(51) Int. Cl.: B29C 45/27, B29C 45/26, B29C 45/73, B29L 31/34, B29K 81/00

(54) **HOT RUNNER MOLD APPARATUS FOR MOLDING ULTRA-THIN ANNULAR RESIN BODY, AND A MOLD SYSTEM PROVIDED WITH HOT RUNNER MOLD APPARATUS**
HEISSKANALFORMVORRICHTUNG ZUM FORMEN RINGFÖRMIGER ULTRADÜNNER HARZKÖRPER UND FORMSYSTEM MIT HEISSKANALFORMVORRICHTUNG
APPAREIL DE MOULAGE À CANAL DE COULÉE CHAUD POUR LE MOULAGE D'UN CORPS ANNULAIRE ULTRA-MINCE EN RÉSINE ET SYSTÈME DE MOULAGE POURVU D'UN APPAREIL DE MOULAGE À CANAL DE COULÉE CHAUD

(30) Priority: 17.06.2015 JP 2015121684
(43) Date of publication of application: 14.03.2018
(73) Proprietor: Shoki Co., Ltd., Kariya-shi, Aichi 448-0813 (JP)
(72) Inventor: ISAYAMA,Shuichi, Kariya-shi Aichi 448-0813 (JP)
(74) Representative: Prüfer & Partner mbB Patentanwälte · Rechtsanwälte
(86) International application number: PCT/JP2016/051637
(87) International publication number: WO 2016/203780

(56) References cited:
- WO-A1-2015/017741
- JP-A- 2003 266 491
- JP-A- 2005 297 454
- JP-A- 2012 106 438
- US-A1- 2004 258 792
- SCHMIDT H: "EIN RASTER, DAS KEINEN WUNSCH OFFENLAESST", PLASTVERARBEITER, HUETHIG GMBH, HEIDELBERG, DE, vol. 38, no. 12, 1 December 1987 (1987-12-01), XP001176320, ISSN: 0032-1338

## Description

The present invention relates to a hot runner mold device for molding of an ultra-thin annular resin body and a mold system equipped with the hot runner mold device.

WO 2016/017741 A1 discloses an injection-molding systems having hot-runner manifolds that contain one or more types of non-melt channels in addition to melt channels, and injection-molding systems containing such hot-runner manifolds. The differing types of non-melt channels include: coolant channels for carrying a coolant for cooling the tips of hot-tip nozzles, for example, during hot latching operations; heating-fluid channels for carrying a heating fluid for heating melt within melt channels within the hot-runner manifolds; and actuation-fluid channels for carrying actuation fluid to valves of valve-actuated nozzles. In each case, nozzles can be formed unitarily monolithically with the hot-runner manifolds and one or more of the various types of non-melt channels can be continuously routed within such unitary monolithic nozzles. Freeform fabrication processes can be used to form hot-runner manifolds of the present disclosure, which often contain complex / intricate internal passageways that form the various types of melt and non-melt channels.

US 2004/258792 A1 discloses an injection molding hot runner manifold with a double or back-up heater, where each heater is capable of producing adequate heat to heat a melt channel zone. The first heater can work independently of the second heater. In one example, the second heater can function as a back-up in the event that the first heater fails, therefore extending the time before the mold has to undergo repairs.

Conventionally, there has been an increasing need for space-saving of the inside of a motor vehicle in view of the improvement of fuel consumption of the motor vehicle and the variety of components incorporated in the motor vehicle.

In recent years, a hydrogen battery for a motor vehicle which has been actively developed is one of the components incorporated in the motor vehicle. Accordingly, it is demanded also for the hydrogen battery to realize weight reduction and size reduction so as to achieve the space-saving of the inside of the motor vehicle.

To meet such a demand, it is necessary to realize weight reduction and size reduction of a separator included in the hydrogen battery. Herein, the separator is constructed by a thin plate-shaped annular frame and a carbon film such as carbon paper attached to a hollow portion of the thin plate-shaped annular frame.

In view of the weight reduction and size reduction of such a separator, it is desirable that a material for molding the thin plate-shaped annular frame constituting the separator is as light as possible and that the thickness of the thin plate-shaped annular frame is as thin as possible.

Therefore, for molding a thin plate-shaped annular frame of the separator of the hydrogen battery, it is highly desirable to develop a mold device which is capable of realizing the weight reduction and size reduction of the thin plate-shaped annular frame, in consideration of a material for molding the thin plate-shaped annular frame.

Furthermore, a cold runner mold device and a hot runner mold device are exemplified as the mold device.

In the cold runner mold device, a molding material flows in a cold runner in a molten state to be filled into a cavity. In this instance, the filled molten molding material is cooled not only in the cold runner but also in the cavity. For this reason, at the time of taking a molded product out of the cold runner mold device, portions of cooled molding material in the cold runner is took out together with the molded product in the cavity. As a result, the portions of the cooled molding material in the cold runner lead to a waste of the molding material and there occurs an additional subsequent operation of cutting the portions of the cooled molding material.

On the other hand, in the hot runner mold device, a molten molding material is maintained in a molten state within a hot runner under heating the hot runner. In such a state, the molten molding material flows through the hot runner from a nozzle thereof into a cavity via a gate thereof and is then filled in the cavity. Accordingly, only the molten molding material in the cavity is cooled, and a molded product is formed.

Thus, the hot runner mold device is superior to the cold runner mold device in a point that only a molded product can be taken out. Accordingly, it is desirable to adopt the hot runner mold device as a mold device of a mold system.

As such a hot runner mold device, for example, a hot runner mold device for injection molding described in JP 2002-348084 A has been proposed.

In the hot runner mold device, under opening and closing drive of each nozzle by both drive devices, a molding material injected in a molten state from an injection molding machine flows toward a cavity through both branched manifold flow paths, each inclined flow path and each hot nozzle flow path, and then be filled into the cavity from a gate of each hot nozzle flow path, and thereafter cooled and solidified in the cavity, and molded as a molded product. In this instance, the both branched manifold flow paths are provided in a heated block manifold, and each inclined flow path and each hot nozzle flow path are provided in an extended manifold so as to correspond to the branched manifold flow paths.

Herein, a heater is provided in the block manifold to heat the block manifold. The heater thus heats toward a moldable temperature the molding material flowing in the both branched manifold flow paths which are provided in the block manifold.

By the way, in the hot runner mold device described above, molding conditions for a molded product are not particularly specified. Therefore, assuming that the molding conditions are usual molding conditions, the thickness of a molded product which can be molded by the hot runner mold device using a molten molding material injected from an injection molding machine is about 1 (mm), no matter how thin it is.

Such a thickness is too thick as a thin plate-shaped annular frame of a separator required for a hydrogen battery of a motor vehicle. This causes drawbacks that it is impossible to respond demand for the weight reduction and size reduction of the thin plate-shaped annular frame, besides, for the weight reduction and size reduction of the hydrogen battery.

As described above, a heater has only a function of rising the temperature of a block manifold. This means that the heater does not have a function not to raise the temperature of the block manifold above a required temperature.

Herein, a molding material may be at least partially carbonized in each branched manifold flow path of the block manifold dependently on a temperature rise according to a temperature rise of the block manifold. This causes drawbacks that it is difficult to mold a molded product with good quality from the molding material.

It is therefore an object of the present invention to provide a hot runner mold device suitable for molding an ultra-thin annular resin body with good quality by using as a molding material a resin material capable of making ultra-thin.

It is another object of the present invention to provide a mold system equipped with the hot runner mold device.

In order to solve these objects according to the present invention, there is provided a hot runner mold device for molding an ultra-thin annular resin body comprises:
a fixed mold (P) including a fixed-side body (10, 20, 30, 40) formed from a predetermined metal material for mold so as to include a manifold (40) having a manifold body (40a), and
a movable mold (Q) including a movable-side body (80a, 90, 100) formed from the predetermined mold metal material so as to have a molding surface abutting against a molding surface of the fixed-side body.

The fixed mold includes :
a fixed-side nest (80) formed from a predetermined metal material for a nest, the fixed-side nest being accommodated in a molding-surface side accommodating hole portion (31) formed in said fixed-side body from its molding surface, and
a hot runner (HR) including a runner flow path (40c) provided in the manifold body and to which a predetermined molding resin material is injected as a molten resin from a resin injection molding machine, and a plurality of nozzles extending from a plurality of outflow path portions formed in the runner flow path toward the molding surface of the fixed-side body through the interior thereof, the hot runner flowing into a plurality of the nozzles the molten resin flowing through the runner flow path and flowing out from a plurality of the outflow path portions of the runner flow path,
a heater (40d) provided in the manifold body together with the runner flow path to heat the manifold body, and
both side temperature control plate members including both side temperature control plates stacked on the manifold body from both surfaces thereof, and both side oil flow circuits included respectively in the both side temperature control plates, the both side oil flow circuits flowing oil at an oil temperature within a predetermined oil temperature range suitable for preventing carbonization of the molten resin to control a temperature of a portion including at least the runner flow path of the manifold body heated by the heater to a temperature suitable for preventing the carbonization of the molten resin through the both side temperature control plates (50a, 50b).

The movable mold includes:
a movable-side body (80a, 90, 100) formed of a metal material, and
a movable-side nest member (N, 110, 120) formed of the predetermined metal material for a nest, the movable-side nest member being accommodated in a molding-surface side accommodating hole portion (101) formed in the movable-side body from its molding surface.

A cavity (CV) is constructed to mold an ultra-thin annular resin body at a thickness within a predetermined ultra-thickness range on a basis of the molten resin from a plurality of the nozzles between the movable-side nest member and the fixed-side nest, when the movable-side body abuts at its molding surface against the molding surface of the fixed-side body so that the movable-side nest member abuts against the fixed-side nest.

In this way, the present invention comprises the both-side temperature control plate members which include the both-side temperature control plates stacked on the manifold body from both the surfaces thereof, and include the both-side oil flow circuits included respectively in the both-side temperature control plates and constructed to cause the oil at the oil temperature within the predetermined oil temperature range suitable for preventing carbonization of the molten resin, thereby to control the temperature of the portion including at least the runner flow path of the manifold body heated by the heater to the temperature suitable for preventing the carbonization of the molten resin through the both-side temperature control plates.

This means that the manifold body is interposed between the both-side temperature control plates and thus the both-side temperature control plates construct a three-layer stacked structure together with the manifold body.

Accordingly, the molten resin can flow through the runner flow path without being carbonized and then flow into a plurality of the nozzles. Thus, on a basis of the molten resin flowing into a plurality of the nozzles in such a way, an ultra-thin annular resin body having a thickness within a predetermined ultra-thickness range can be molded in the cavity without being carbonized.

As a result, by the hot runner mold device, an ultra-thin annular resin body can be molded with high quality.

Further, according the present invention, the hot runner mold device includes:
a fixed-side temperature control means (130, 150) for controlling each temperature of the fixed-side body and the fixed-side nest to a predetermined fixed-side temperature,
a movable-side temperature control means (140, 160) for controlling each temperature of the movable-side body and the movable-side nest member to a predetermined movable-side temperature, and
a nozzle temperature control means (70a, 70b) for controlling a temperature so as to prevent carbonization of a molten resin flowing in a plurality of the nozzles.

With such a construction, the respective temperatures of the fixed-side body and the fixed-side nest are controlled to the predetermined fixed-side temperature, the respective temperatures of the movable-side body and the movable-side nest member are controlled to the predetermined movable-side temperature, and the molten resin flowing in a plurality of the nozzles is controlled in its temperature so that it is not carbonized.

Accordingly, the molten resin flows smoothly in the fixed-side body, the fixed-side nest, the movable-side body, and the movable-side nest member without being carbonized. Thus, an ultra-thin annular resin body having a thickness within a predetermined ultra-thickness range can be molded successfully in the cavity without being carbonized. As a result, the operations and effects of the hot runner mold device according to the present invention can be further improved.

Still further, according to the present invention, in the hot runner mold device, the hot runner includes a plurality of the nozzles as a plurality of open nozzles (60a to 60h). When the molten resin is injected from the resin injection molding machine at a predetermined high injection speed, the molten resin flows through the hot runner on a basis of the predetermined high injection speed and flows into a plurality of the open nozzles from a plurality of the outflow path portions thereof.

In this way, a plurality of the nozzles each is the open nozzle. Thus, each open nozzle is always maintained in an open state without any opening and closing operation like a valve nozzle or a pin nozzle. Accordingly, even when the injection speed of a molten resin injected from the resin injection molding machine is the predetermined high injection speed, the molten resin can flow smoothly through each of the open nozzles.

As a result, an ultra-thin annular resin body can be molded smoothly in the cavity on a basis of the molten resin flowing in a plurality of the open nozzles.

Still further, according to the present invention, the predetermined molding resin material contains super engineering plastics.

Accordingly, since the super engineering plastics contained in the predetermined resin material for molding have high temperature resistance performance, an ultra-thin annular resin body can be molded smoothly in the cavity by the molten resin of the predetermined resin material for molding. As a result, the operations and effects of the hot runner mold device according to the present invention can be further improved.

Still further, according to the present invention, in the hot runner mold device, the predetermined metal material for a nest is an alloy having at least high thermal conductivity, and the cavity is coated on its inner surface by a predetermined coating agent increasing hardness so as to improve flowability of the molten resin.

In this way, the predetermined metal material for a nest is an alloy having at least high thermal conductivity, and the cavity is coated on its inner surface by a predetermined coating agent increasing hardness so as to improve flowability of the molten resin. Thus, the flowability of the molten resin can be improved.

Accordingly, the flow speed of the molten resin in the hot runner and the cavity can be maintained substantially at the predetermined high injection speed. As a result, the operations and effects of the hot runner mold device according to the present invention can be further improved.

Another still further, according to the present invention, in the hot runner mold device, the predetermined ultra-thickness range is 0.1 (mm) to 0.5 (mm).

Accordingly, the operations and effects of the hot runner mold device according to the present invention can be reliably realized.

Another still further, according to the present invention, in the hot runner mold device, an ejector mechanism (180) is provided and includes:
a push-up member (181) accommodated displaceably in a space (Qa) formed so as to oppose the fixed-side nest through the movable-side nest member in the movable-side body in a direction from the space to the movable-side nest member or in its opposite direction,
a plurality of support rods (182) extended from the push-up member toward the movable-side nest member through the space in the movable-side body, a plurality of the support rods displacing in their axial directions together with the push-up member, and
a plurality of push-up pins (183) extended at outer peripheral sides of the support rods in the movable-side body from the push-up member through the space to support the cavity at a plurality of outside portions(Ta, Tbb, Tcc, Tdd, Sa, Sb, Sc, Sd) of the cavity from below.

The movable-side nest member includes a movable-side outer nest (110) accommodated in the accommodating hole portion of the movable-side body, and a movable-side inner nest (120) accommodated in an accommodating hole portion formed in the movable-side outer nest from the molding surface of the movable-side body, the movable-side inner nest being supported by a plurality of the support rods from below.

Accordingly, if the push-up member of the ejector mechanism is displaced within the space toward the movable-side nest in a state where the movable mold is detached from the fixed mold, the support rods are also displaced in the same direction along with the displacement of the push-up member together with the push-up pins. Thus, the movable-side inner nest is ejected from the movable-side outer nest outward together with an ultra-thin resin molded body in the cavity by the support rods and the push-up pins.

Herein, the movable-side inner nest is supported by the support rods from below, as described above. And, the ultra-thin resin molded body is supported at the outside portions of the cavity by the push pins from below.

Consequently, along with the above-mentioned displacement of the push-up member, ejection of the ultra-thin resin molded body from the movable-side outer nest is performed simultaneously with ejection of the movable-side inner nest from the movable-side outer nest by the support rods.

In this way, since the ultra-thin resin molded body is not ejected solely, but is ejected together with the movable-side inner nest, the ultra-thin resin molded body can be ejected successfully without being broken, even though it is very thin.

In a state that the ultra-thin resin molded body is ejected as previously described, a portion other than an ultra-thin annular resin molded product of the ultra-thin resin molded body is removed, thereby to be capable of successfully completing molding of the ultra-thin resin molded body utilizing the above-mentioned predetermined resin material for molding in the hot runner mold device.

Herein, in the present invention including the ejector mechanism, the hot runner includes a plurality of the nozzles as a plurality of open nozzles (60a to 60h). When the molten resin is injected from the resin injection molding machine at a predetermined high injection speed, the hot runner causes the molten resin to flow into the runner flow path at the predetermined high injection speed and to flow from the outflow path portions into a plurality of the open nozzles.

Accordingly, since a plurality of the nozzles are respectively the open nozzles, the open nozzles are always open without opening and closing operation like a valve nozzle and a pin nozzle. Accordingly, the molten resin can flow smoothly through the open nozzles, even when the injection speed of the molten resin injected from the resin injection molding machine is the predetermined high injection speed. As a result, operations and effects of the hot runner mold device for molding of an ultra-thin annular resin body having the ejector mechanism according to the present invention can be further improved.

In the present invention including the ejector mechanism, as described above, the predetermined molding resin material contains super engineering plastics. Accordingly, since the super engineering plastics have high temperature resistance performance, molding of the ultra-thin annular resin body in the cavity can be further smoothed with the molten resin of the predetermined molding resin material. As a result, the operations and effects of the hot runner mold device including the ejector mechanism according to the present invention can be further improved.

Still further, according to the present invention, in the hot runner mold device, the predetermined metal material for a nest is an alloy having at least high thermal conductivity, the cavity is coated at its inner surface with a predetermined coating agent increasing hardness so as to improve flowability of the molten resin, and the predetermined ultra-thickness range is 0.1 (mm) to 0.5 (mm).

In this way, the predetermined metal material for a nest is an alloy having at least high thermal conductivity, and the cavity is coated at its inner surface with a predetermined coating agent increasing hardness so as to improve flowability of the molten resin. Thus, the flowability of the molten resin can be improved.

Consequently, the flow speed of the molten resin in the hot runner and the cavity can be maintained substantially at the predetermined high injection speed. As a result, the operations and effects of the hot runner mold device including the ejector mechanism can be further improved.

According to the present invention, there is provided a mold system equipped with a hot runner mold device (M) for forming an ultra-thin annular body comprises:
a fixed mold (P) including a fixed-side body (10,20,30,40) formed from a predetermined mold metal material so as to include a manifold (40) having a manifold body (40a); and
a movable mold (Q) including a movable-side body (80a,90,100) formed from the predetermined mold metal material so as to have a molding surface abutting against a molding surface of the fixed-side body.
The fixed mold includes a fixed-side nest(80) formed from a predetermined metal material for a nest, the fixed-side nest being accommodated in a molding-surface side accommodating hole portion formed in the fixed-side body from its molding surface,
a hot runner (HR) including:
   a runner flow path provided in the manifold body and to which a predetermined molding resin material is injected as a molten resin from a resin injection molding machine, and a plurality of open nozzles(60a-60h) extended from a plurality of outflow path portions formed in the runner flow path toward the molding surface of the fixed-side body through the interior thereof, the hot runner flowing into a plurality of the open nozzles the molten resin flowing through the runner flow path and flowing out from a plurality of the outflow path portions of the runner flow path,
   a heater (40d) provided in the manifold body together with the runner flow path to heat the manifold body,
   both-side temperature control plate members(50a,50b) including both-side temperature control plates (51,53) stacked on the manifold body from both surfaces thereof, and both-side oil flow circuits (52,54) included respectively in the both-side temperature control plates, the both-side temperature control plate members flowing oil at an oil temperature within a predetermined oil temperature range suitable for preventing carbonization of the molten resin, thereby to control a temperature of a portion including at least the runner flow path of the manifold body heated by the heater to a temperature suitable for preventing the carbonization of the molten resin through the both-side temperature control plates,
   a fixed-side temperature control means (130,150) for controlling each temperature of the fixed-side body and the fixed-side nest to a predetermined fixed-side temperature, and
   a nozzle temperature control means (70a,70b) for controlling a temperature so as to prevent carbonization of a molten resin flowing in a plurality of the open nozzles.

The movable mold includes:
a movable-side body (80a,90,100) formed of a metal material,
a movable-side nest member (N,110,120) formed from the predetermined metal material for a nest, the movable-side nest member being accommodated in a molding-surface side accommodating hole portion(101) formed in the movable-side body from its molding surface, and
a movable-side temperature control means (140,160) for controlling each temperature of the movable-side body and the movable-side nest member to a predetermined movable-side temperature.

A cavity (CV) is constructed to mold an ultra-thin annular resin body between the movable-side nest member and the fixed-side nest at a thickness within a predetermined ultra-thickness range on a basis of the molten resin from a plurality of the open nozzles, when the movable-side body abuts at its molding surface against the molding surface of the fixed-side body, thereby to abut the movable-side nest member against the fixed-side nest.

The mold system includes also an oil circulator for circulates oil through the both-side oil flow circuits of the both-side temperature control plate members of the hot runner mold device at an oil temperature within the predetermined oil temperature range suitable for preventing the carbonization of the molten resin.

In this way, the both-side temperature control plate members are provided to include:
both-side temperature control plates (51,53) stacked on the manifold body from both surfaces thereof, and
both-side oil flow circuits (52,54) included respectively in the both-side temperature control plates, the both-side temperature control plate members flowing oil at an oil temperature within a predetermined oil temperature range suitable for preventing carbonization of the molten resin, thereby to control a temperature of a portion including at least the runner flow path of the manifold body heated by the heater to a temperature suitable for preventing the carbonization of the molten resin through the both-side temperature control plates.

This means that by interposing the manifold body between the both-side temperature control plates, the both-side temperature control plates construct a three-layer stacked structure together with the manifold body, thereby to control the temperature of the portion including at least the runner flow path of the manifold body to the temperature suitable for preventing carbonization of the molten resin through the both-side temperature control plates.

Accordingly, the molten resin can flow into the runner flow path without being carbonized and then flows into a plurality of the nozzles. And, on a basis of the molten resin flowing into a plurality of the open nozzles in such a way, an ultra-thin annular resin body having a thickness within a predetermined ultra-thickness range can be molded in the cavity without being carbonized. As a result, according to the hot runner mold device, an ultra-thin annular resin body can be molded with high quality.

Herein, the respective temperatures of the fixed-side body and the fixed-side nest are controlled to the predetermined fixed-side temperature, the respective temperatures of the movable-side body and the movable-side nest member are controlled to the predetermined movable-side temperature, and the molten resin flowing in a plurality of the open nozzles controlled so that it is not carbonized.

Consequently, the molten resin flows smoothly in the fixed-side body, the fixed-side nest, the movable-side body, and the movable-side nest member without being carbonized. As a result, an ultra-thin annular resin body having a thickness within the predetermined ultra-thickness range can be molded successfully in the cavity without being carbonized.

Also, a plurality of the open nozzles are always maintained in a opened condition without any opening and closing operation like a valve nozzle and a pin nozzle. Accordingly, even when the injection speed of the molten resin injected from the resin injection molding machine is the predetermined high injection speed, the molten resin can flow smoothly through each of the open nozzles. As a result, molding of an ultra-thin annular resin body in the cavity can be performed smoothly on a basis of the molten resin flowing in a plurality of the open nozzles.

Based on the above descriptions, operations and effects of the mold system including the hot runner mold device according to the present invention can be further improved.

According to the present invention, in the mold system equipped with the above-mentioned hot runner mold device for molding of an ultra-thin annular resin body,
the hot runner mold device contains super engineering plastics as the predetermined molding resin material.

Accordingly, from the fact that the super engineering plastics contained in the predetermined molding resin material have high temperature resistance performance, it is possible to further smooth molding of the ultra-thin annular resin body in the cavity with the predetermined resin material for molding. As a result, the operations and effects of the mold system equipped with the hot runner mold device for molding of the ultra-thin annular resin body according to the present invention can be further improved.

In the mold system equipped with the hot runner mold device for molding of the ultra-thin annular resin body according to the present invention, the predetermined metal material for a nest in the hot runner mold device is an alloy having at least high thermal conductivity, and the cavity is coated at its inner surface with a predetermined coating agent increasing hardness so as to improve flowability of the molten resin.

In this way, since the predetermined metal material for a nest is an alloy having at least high thermal conductivity, and the cavity is coated at its inner surface with a predetermined coating agent increasing hardness so as to improve flowability of the molten resin, the molten resin can be improved in its flowability.

Accordingly, the flow speed of the molten resin in the hot runner and/or the cavity can be maintained substantially at the predetermined high injection speed. As a result, the operations and effects of the mold system equipped with the hot runner mold device for molding of the ultra-thin annular resin body according to the above-mentioned present invention can be further improved.

Further, in the mold system according to the present invention, in the hot runner mold device, the predetermined ultra-thickness range is predetermined to be 0.1 (mm) to 0.5 (mm).

Accordingly, the operations and effects of the mold system equipped with the hot runner mold device according to the present invention can be further improved.

Still further, in the mold system equipped with the hot runner mold device for molding of the ultra-thin annular resin body according to the present invention, the hot runner mold device comprises an ejector mechanism (180) which includes:
a push-up member (181) accommodated displaceably in a space (Qa) formed so as to oppose the fixed-side nest through the movable-side nest member in the movable-side body in a direction from the space to the movable-side nest member or in its opposite direction,
a plurality of support rods (182) extended from the push-up member toward the movable-side nest member through the space in the movable-side body, a plurality of the support rods displacing in their axial directions together with the push-up member, and
a plurality of push-up pins (183) extended at outer peripheral sides of the support rods in the movable-side body from the push-up member through the space to support the cavity at a plurality of outside portions (Taa, Tbb, Tcc, Tdd, Sa, Sb, Sc, Sd) of the cavity from below.

The movable-side nest member includes:
a movable-side outer nest (110) accommodated in the accommodating hole portion of the movable-side body; and
a movable-side inner nest (120) accommodated in an accommodating hole portion formed in the movable-side outer nest from its molding surface, the movable-side inner nest being supported by a plurality of the support rods from below.

Accordingly, when the push-up member of the ejector mechanism is displaced within the space toward the movable-side nest in a state where the movable mold is detached from the fixed mold, the support rods are displaced together with the push-pin pins in the same direction along with the displacement of the push-up member. Thus, the movable-side inner nest is ejected together with an ultra-thin resin molded body in the cavity from the movable-side outer nest outward by the support rods and the push-up pins.

Herein, the movable-side inner nest is supported by the support rods from below, as described above. And, the ultra-thin resin molded body is supported by the push-up pins from below at the outside portions of the cavity, as described above.

Accordingly, along with the above-mentioned displacement of the push-up member, ejection of the ultra-thin resin molded body from the movable-side outer nest by the push-up pins is performed simultaneously with ejection of the movable-side inner nest from the movable-side outer nest by the support rods.

In this way, the ultra-thin resin molded body is not ejected solely, but is ejected together with the movable-side inner nest. Thus, the ultra-thin resin molded body can be ejected successfully without being broken, even though it is very thin.

In the ejected state as described above, a portion other than the ultra-thin resin molded body of an ultra-thin annular resin molded product is removed and thus, molding of an ultra-thin resin molded body utilizing the predetermined resin material for molding can be completed successfully in the hot runner mold device. Consequently, the operations and effects of the mold system equipped with the hot runner mold device for molding of ultra-thin resin molded body according to the present invention can be further improved.

In addition, the reference signs in the parentheses of the above-mentioned means indicate the correspondence with the specific means described in embodiments to be described below.

The invention may be put into in various ways, but specific embodiment will be described by way of examples with reference to the accompanying drawings, in which:
FIG. 1 is a front view of a mold system according to an embodiment of the present invention,
FIG. 2 is a left side view of a hot runner mold device shown in FIG. 1,
FIG. 3 is a plan view of a fixed mold of the hot runner mold device shown in FIG. 1, as viewed from a side of a parting line,
FIG. 4 is a plan view of the fixed mold of the hot runner mold device shown in FIG. 1, as viewed from the side of the parting line,
FIG. 5 is a plan view of a movable mold of the hot runner mold device shown in FIG. 1, as viewed from the side of the parting line,
FIG. 6 is a perspective view of the hot runner mold device shown in FIG. 1,
FIG. 7 is a perspective view of the hot runner mold device shown in FIG. 1,
FIG. 8 is a perspective view of the fixed mold shown in FIG. 6 or 7,
FIG. 9 is a perspective view of the fixed mold shown in FIG. 6 or 7,
FIG. 10 is a perspective view of the fixed mold shown in FIG. 9, as viewed from the side of the parting line,
FIG. 11 is a perspective view of an assembling structure of a manifold body, upper and lower temperature control plate members, left and right temperature control plates, a plurality of open nozzles, and bushes for each open nozzle shown in FIG. 1.
FIG. 12 is a perspective view of the assembling structure of the manifold body, the upper and lower temperature control plate members, the left and right temperature control plates, the open nozzles, and the bushes for each open nozzle shown in FIG. 1,
FIG. 13 is a perspective view of an assembling structure of the manifold body and a plurality of the open nozzles shown in FIG. 11,
FIG. 14 is a perspective view of the assembling structure of the manifold body and a plurality of the open nozzles shown in FIG. 11,
FIG. 15 is an exploded perspective view of the upper and lower temperature control plate members, the left and right temperature control plates, and a plurality of the open nozzle bushes for each open nozzle shown in FIG. 12,
FIG. 16 is a perspective view showing a configuration of a hot runner and a plurality of coil heaters,
FIG. 17 is a perspective view showing a configuration of the hot runner,
FIG. 18 is a perspective view of the movable mold shown in FIG. 1, as viewed from the side of the parting line,
FIG. 19 is a partially-broken plan view of the movable mold shown in FIG. 18,

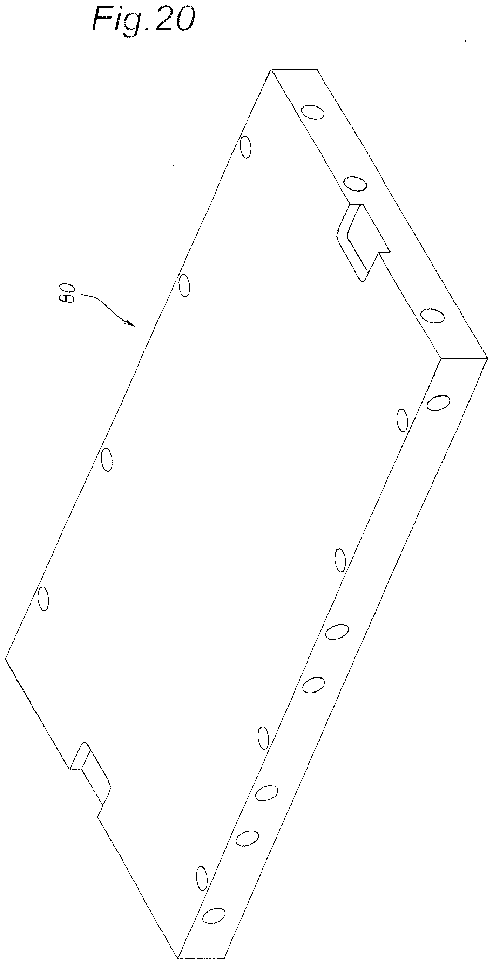

FIG. 20 is a perspective view of a fixed-side inner nest of the fixed mold shown in FIG. 1,
FIG. 21 is a perspective view showing a movable-side outer nest of the movable mold shown in FIG. 18,
FIG. 22 is a perspective view of a movable-side inner nest of the movable mold shown in FIG. 18,
FIG. 23 is a perspective view showing a configuration of a fixed-side oil flow circuit included in the fixed mold shown in FIG. 1,
FIG. 24 is a perspective view showing a configuration of a movable-side oil flow circuit included in the movable mold shown in FIG. 1,
FIG. 25 is a perspective view of an ejector mechanism of the hot runner mold device shown in FIG. 1 together with the movable-side inner nest,
FIG. 26 is a perspective view showing the ejector mechanism of FIG. 25 together with the movable-side inner nest in a state that a plurality of push-up pins are abbreviated,
FIG. 27 is a perspective view showing the ejector mechanism of FIG. 25 in a state that push-up shafts are abbreviated, and
FIG. 28 is a perspective view shown the ejector mechanism of FIG. 25 in a state that the movable-side inner nest and each push-up shaft are abbreviated.

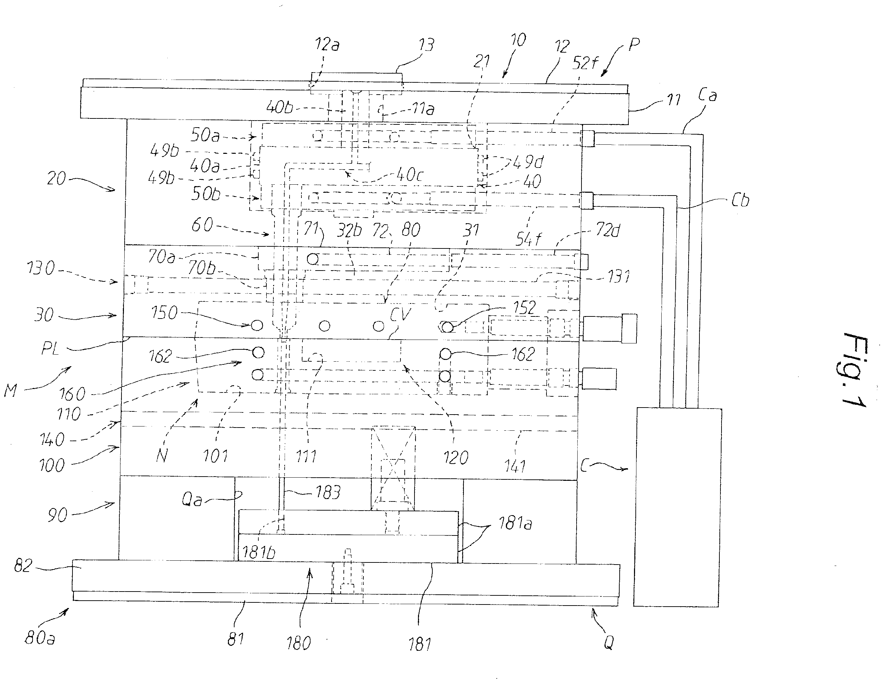

Hereinafter, a preferred embodiment of the present invention is described below with reference to the drawings. FIG. 1 shows a mold system according to the present invention. The mold system is suitable for molding an ultra-thin annular resin frame body for a separator of a hydrogen battery functioning as a power source of a motor vehicle, using a molten resin injected from a resin injection molding machine (not shown).

In the embodiment, the ultra-thin annular resin frame body constitutes a separator with a carbon film such as carbon paper. The separator is configured by attaching the carbon film to a hollow portion of the ultra-thin annular resin frame body. In addition, the separator functions to convert hydrogen and oxygen into water and electric energy by a chemical reaction through the carbon film in the hydrogen battery.

As shown in FIG. 1, the mold system includes a hot runner mold device M and an oil circulator C. First, the reason why the inventor has developed the hot runner mold device M in the mold system is described in detail.

In recent years, there has been an increasing request for reducing the weight and thickness of a separator in order to realize the weight reduction and size reduction of a hydrogen battery for a motor vehicle. To meet such a request, it is required that a material for forming an annular frame body of the separator is lightweight and that the thickness of the annular frame body is very thin, for example, 0.3 (mm).

For such a request, the inventor has examined various materials for forming an annular frame body of a separator suitable for use in a hydrogen battery of the motor vehicle. For example, if the material for forming the annular frame body is metal or non-woven fabrics as in conventional cases, these materials are not suitable for the weight reduction and size reduction of the annular frame body. Accordingly, it is impossible to meet the request for the weight reduction and size reduction of a hydrogen battery.

There, it has guessed that if a synthetic resin material different from metal and non-woven fabric is used as the material for forming an annular frame body of a separator, the synthetic resin material may be suitable for the weight reduction and size reduction of the annular frame body of the separator. Thus, various investigations have been on synthetic resin materials.

It has been found that among various synthetic resin materials, super engineering plastics are suitable for the environment for use of the hydrogen battery in the motor vehicle. Further, it has been also found that among various types of super engineering plastics, polyester sulfone (so called "PES") has good characteristics for the weight reduction and size reduction of the annular frame body for the separator, especially good characteristics in a high temperature range.

Therefore, the inventor has decided to use PES as the material for forming the annular frame body for the separator of the hydrogen battery. Specifically, the inventor has focused to use a predetermined molding resin material containing PES as a main component as descried later and to develop a mold device suitable for molding the annular frame body of a separator as an ultra-thin annular resin frame body, using the predetermined molding resin material.

By the way, PES contained in the predetermined molding resin material has high thermal resistance or the like in a high temperature range, but has poor flowability or flow property in its molten state. This means that the flow length of PES in its molten state is very short.

Meanwhile, in the separator of the hydrogen battery, the surface shape of the carbon film is very wide, which is not suitable for usual molding by a resin injection molding machine using a resin material. The outline size of an annular frame body to which a carbon film is attached is thus larger than that of the carbon film.

Therefore, it is necessary to configure a mold device so as to have a cavity corresponding to the surface shape of an annular frame body with a large outline size and the thickness of the annular frame body, such as 0.3 (mm). In other words, it is necessary to form the inside of the cavity so as to be very large and very thin, in order to correspond to the surface shape of an annular frame body with a large outline size and the thickness of the annular frame body, such as 0.3 (mm).

As described above, the inside of the cavity is very large and thin and the flowability of PES is very poor. Accordingly, if the filling speed of PES into the cavity is low, the PES is crystallized while flowing in the cavity and thus cannot be filled into the entirety of the cavity. In other words, for filling PES into the entirety of the cavity, it is needed to instantaneously fill the PES into the cavity at a predetermined high speed, for example, 350 (m/s). In addition, the predetermined high speed corresponds to a predetermined filling time (for example, a time within a range of 0.01 (sec) to 0.4 (sec)) which is suitable for successfully filling PES into the entirety of the cavity.

Thus, for successfully filling PES in its molten state into the entirety of the cavity in the mold device, it is desirable that the cavity has plural gates positioned in an appropriately distributed manner. In other words, it is desirable that a runner necessary for filling PES into the cavity has plural nozzles.

Herein, in a case where each nozzle has a valve configuration, if the filling speed of PES in its molten state into the cavity is increased, the PES may be filled into the entirety of the cavity. However, the time required for filling the PES into the cavity is reduced. Accordingly, the opening and closing interval of each valve by the valve configuration needs to be reduced.

Such an opening and closing drive construction of each nozzle cannot follow the above-mentioned reduction of the opening and closing interval of each valve by the valve configuration, and thus the opening and closing interval of each nozzle cannot be reduced appropriately. In other words, as the filling speed of PES in its molten state is increased, opening and closing of each nozzle cannot follow the filling speed of PES. Thus, it is difficult to successfully mold an ultra-thin annular resin frame body of a separator.

From the above, it has concluded it is desirable that each nozzle of a runner is an open nozzle.

When the mold device is a cold runner mold device, as described at the beginning of the specification, PES as a molding material is wasted. And it is necessary to have an additional subsequent operation of cutting unnecessary portions of the molding material at the time of taking out a molded product. Moreover, while PES has high thermal resistance, the PES becomes to flow and be crystalized when the temperature of the cavity and surrounding temperature of the cavity are reduced during flowing of the PES into the cavity.

Therefore, the inventor has decided to use a hot runner mold device M (see FIG. 1) including an open nozzle group constructed by a plurality of open nozzles as a mold device suitable for molding an ultra-thin annular resin frame body of a separator used in a hydrogen battery of a motor vehicle.

According to the present embodiment, the predetermined molding resin material is melted in the resin injection molding machine described above and introduced as a molten resin in a manifold body 40a of a manifold 40 through a nozzle 40b in the hot runner mold device M (see FIG. 1), as described later.

Herein, the above-mentioned predetermined molding resin material is suitable as a material for molding the ultra-thin annular resin frame body. For improving the flowability of PES, the predetermined molding resin material contains, in addition to PES functioning as a main component melt liquid crystalline wholly aromatic polyester (LCP) which is a kind of liquid crystalline polyester among engineering plastics and a glass fiber (GF).

The molding temperature of the predetermined molding resin material is a temperature within a predetermined molding temperature range (a range of 360 (°C) or higher to lower than 400 (°C)), preferably a temperature within a range of 360 (°C) to 390 (°C). A glass transition temperature is Tg = 225 (°C). In addition, the predetermined molding temperature range corresponds to a temperature range in which carbonization of the predetermined molding resin material can be suppressed.

In the embodiment, PES is appropriate for molding an ultra-thin annular resin frame body having a thickness of 0.3 (mm), mainly in view of good heat resistance. In the molding resin material, LCP acts a role to improve the flowability of PES. The glass fiber acts a role to increase the surface hardness of the resin material for molding.

Even when the ultra-thin annular resin frame body is thin such as 0.3 (mm) and the flowability of PES is not good, the predetermined molding resin material is a molding material containing PES as a main component as described above, thereby to improve the flowability of PES. Thus, the flowability of the predetermined molding resin material can be improved. In addition, components of the predetermined molding resin material other than PES are not limited to LCP and GF as long as such components can improve the flowability of PES as the predetermined molding resin material.

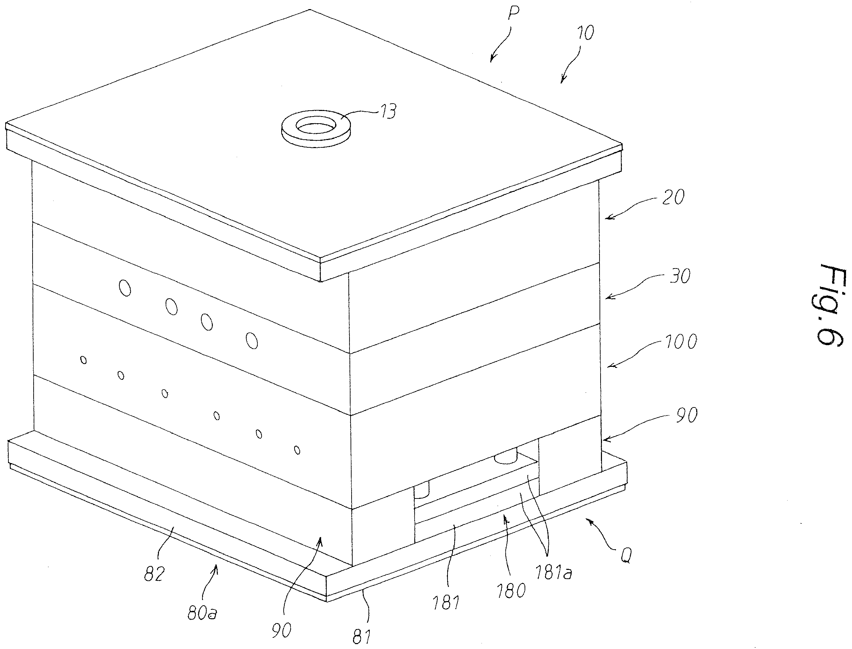

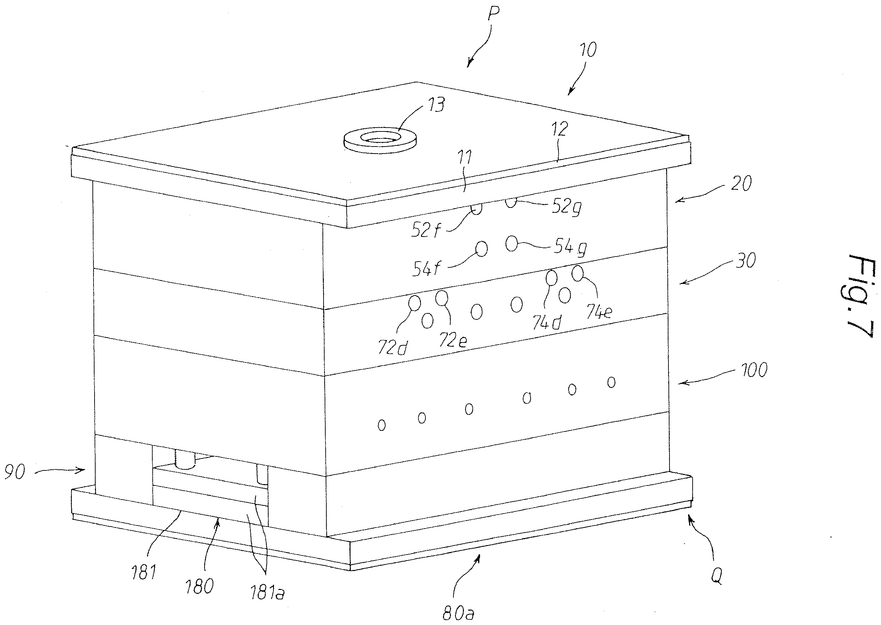

Hereinafter, a construction of the hot runner mold device M is described in detail. As shown in any of FIGS. 1, 2, 6, and 7, the hot runner mold device M is constructed by a fixed mold P and a movable mold Q.

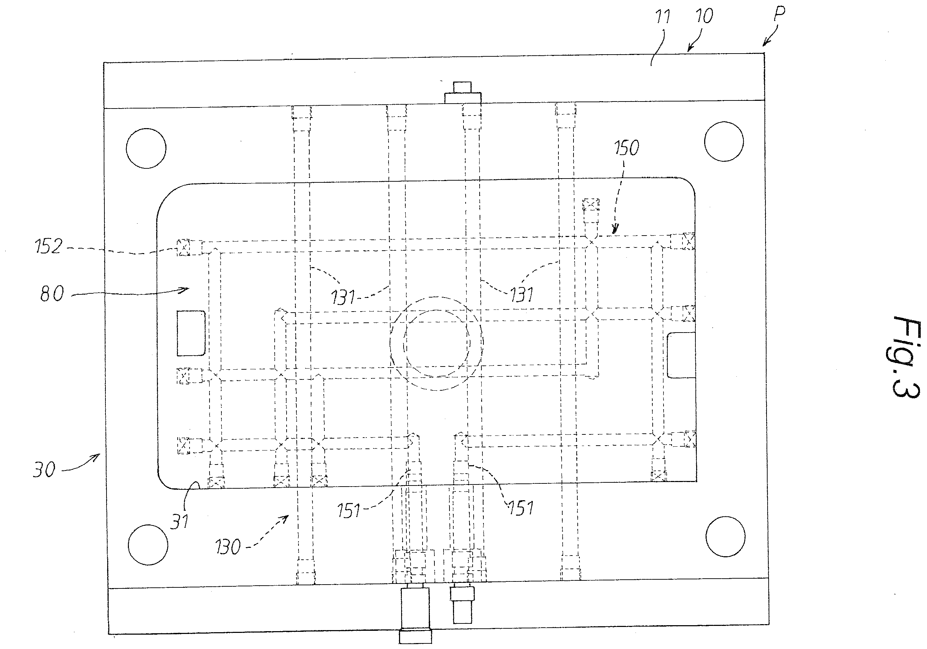

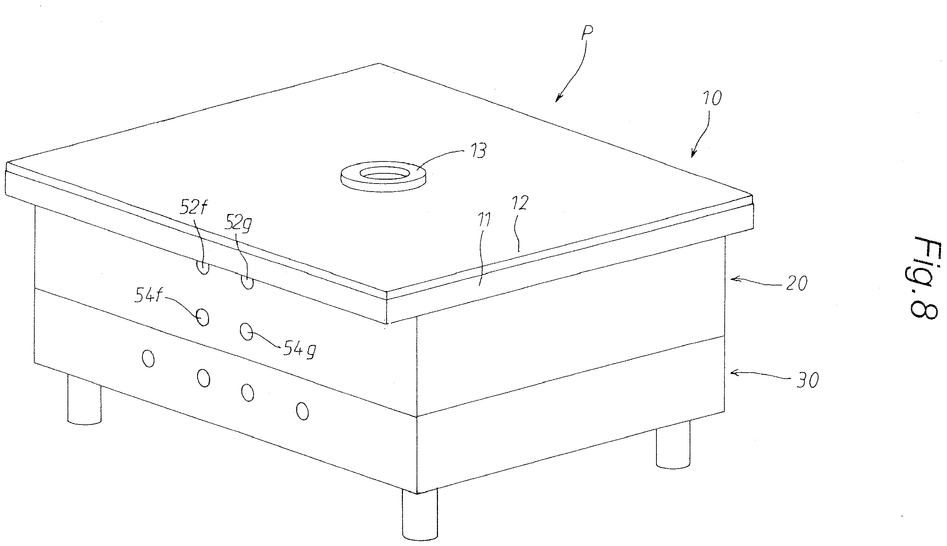

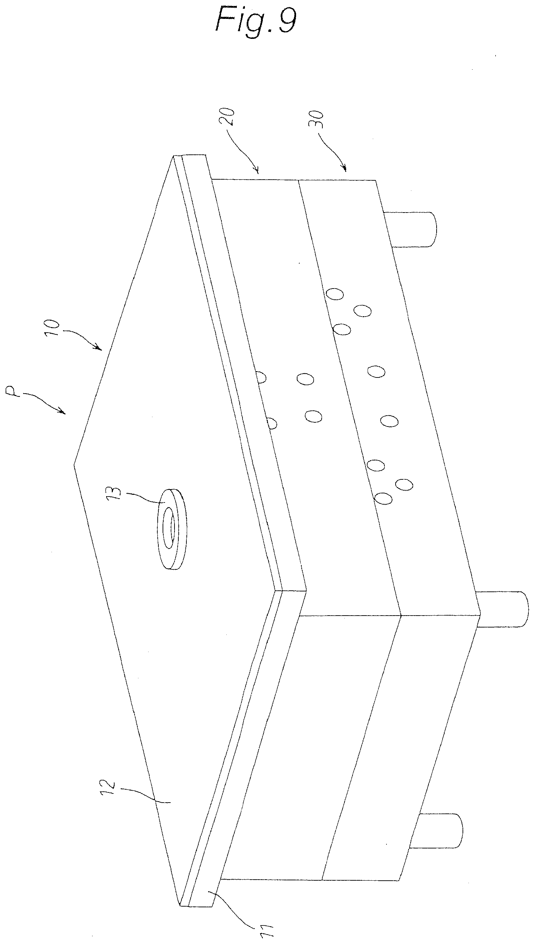

As shown in any of FIGS. 1 to 4 and FIGS. 6 to 9, the fixed mold P includes a fixed-side mounting plate 10, a manifold holding plate 20, and a fixed-side main mold 30. The fixed-side mounting plate 10 is formed of a metal material so as to include an inner plate 11 and an outer plate 12. In the fixed-side mounting plate 10, the outer plate 12 is stacked at its lower surface on an upper surface of the inner plate 11. In addition, in FIG. 1, a front side, a back side, a left side, a right side, an upper side, and a lower side of the drawing correspond to a front side, a rear side, a left side, a right side, an upper side, and a lower side of the hot runner mold device M, respectively.

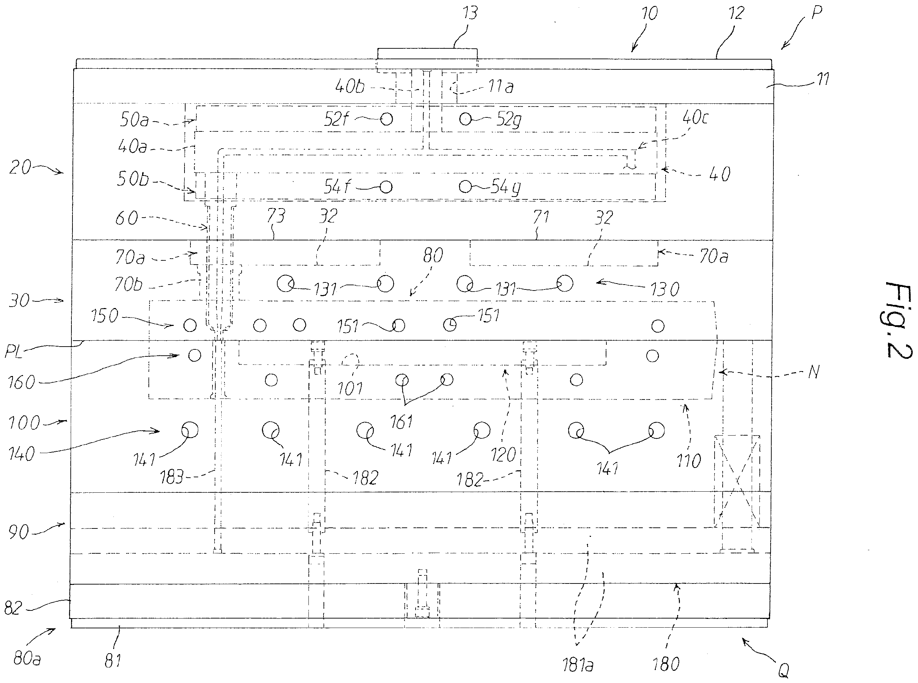

As shown in FIG. 1 or 2, the fixed-side mounting plate 10 has a locating ring 13 for positioning. The locating ring 13 for positioning is fitted externally into a through-hole portion 12a formed at a center portion of the outer plate 12, and opposes an injection nozzle (not shown) of the resin injection molding machine described above.

The manifold holding plate 20 is attached to the inner plate 11 of the fixed-side mounting plate 10 from a side of a lower surface of the inner plate 11 (hereinafter, referred to as "a lower surface of the fixed-side mounting plate 10"). The fixed-side main mold 30 is attached to the manifold holding plate 20 from a side of a lower surface of the manifold holding plate 20. A lower surface (molding surface) of the fixed-side main mold 30 forms a so-called parting line PL in the hot runner mold device (see FIG. 1) together with an upper surface (molding surface) of a movable-side main mold 100 (described later) of the movable mold Q. In addition, the manifold holding plate 20 is formed from a predetermined metal material (for example, chromium molybdenum steel) together with the fixed-side main mold 30 and the manifold 40 (both are described later).

As shown in FIG. 1 or 2, the fixed mold P includes a manifold 40 and upper and lower temperature control plate members 50a, 50b. The manifold 40 includes, as shown in FIGS. 1 and 2, a manifold body 40a and an introduction nozzle 40b. The manifold body 40a is held in a recess portion 21 of the manifold holding plate 20 together with the upper and lower temperature control plate members 50a, 50b, along the fixed-side mounting plate 10. In addition, the recess portion 21 is formed to the manifold holding plate 20 concavely from an upper surface of the manifold holding plate 20.

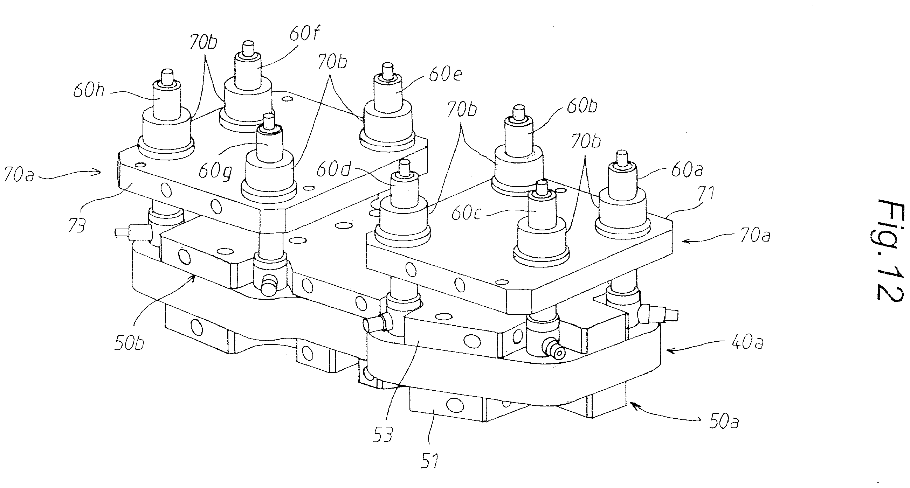

As shown in any of FIGS. 1, 2, 11, and 12, the upper temperature control plate member 50a is stacked at its lower surface on an upper surface of the manifold body 40a. The manifold body 40a is stacked at its lower surface on an upper surface of the lower temperature control plate member 50b.

In other words, the manifold 40 constitutes at its manifold body 40a a three-layer stacked structure together with the upper and lower temperature control plate members 50a, 50b arranged on upper and lower sides of the manifold body 40a.

A configuration of the three-layer stacked structure is described in detail below. As described above, the manifold 40 constitutes at the manifold body 40a the three-layer stacked structure with the upper and lower temperature control plate members 50a, 50b. In the manifold 40, the introduction nozzle 40b is extended from a center portion of the upper surface of the manifold body 40a into the locating ring 13 for positioning through the upper temperature control plate member 50a and a central through-hole 11a of the inner plate 11.

Accordingly, the manifold 40 opposes at the introduction nozzle 40b coaxially the injection nozzle (not shown) of the resin injection molding machine and abuts against the injection nozzle. Thus, a molten resin injected from the injection nozzle of the resin injection molding machine is introduced into the manifold body 40a through the introduction nozzle 40b.

As shown in any of FIGS. 1, 2, 16, and 17, the manifold 40 further includes a flow-dividing type runner flow path 40c and a plurality of coil heaters 40d.

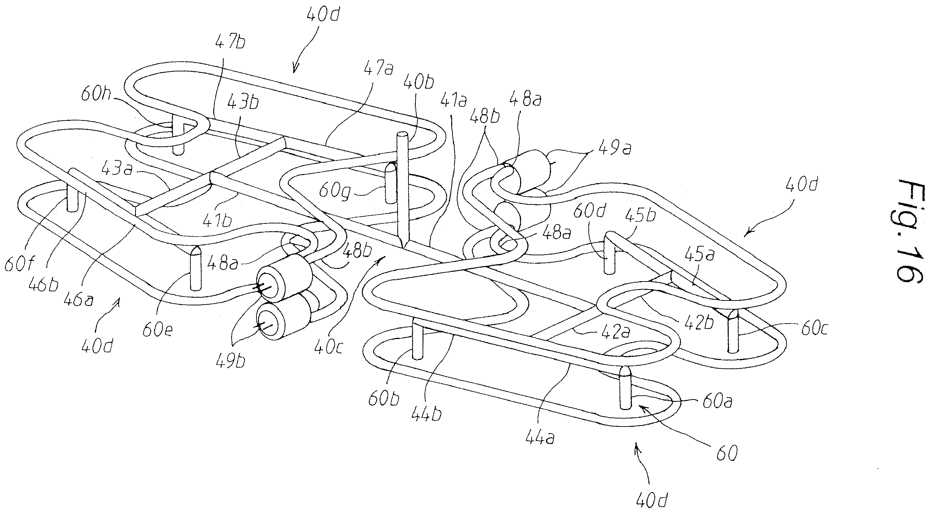

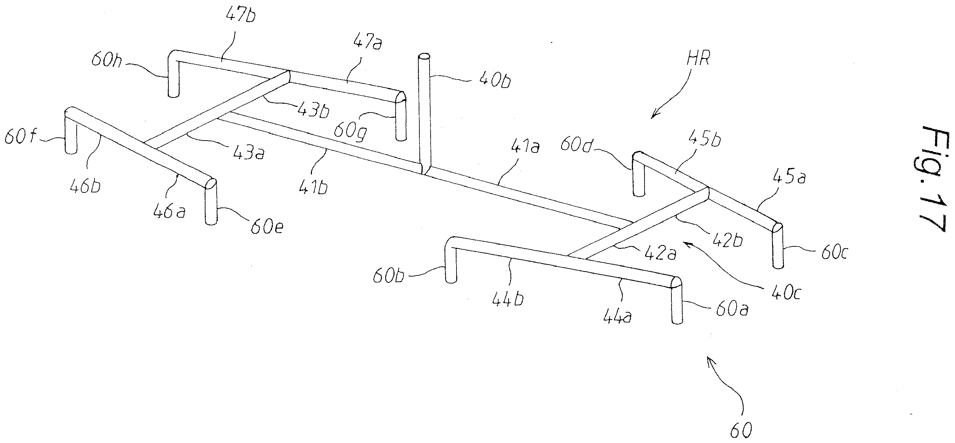

The flow-dividing type runner flow path 40c constitutes, as shown in FIG. 16 or 17, a hot runner HR (see FIG. 17) with an open nozzle group 60. The flow-dividing type runner flow path 40c is formed in the manifold body 40a along the upper and lower temperature control plate members 50a, 50b. As shown in FIG. 16 or 17, the flow-dividing type runner flow path 40c includes a pair of proximal end flow path portions 41a, 41b, two pairs of intermediate flow path portions 42a, 42b; 43a, 43b, and four pairs of tip or distal end flow path portions 44a, 44b; 45a, 45b; 46a, 46b; 47a, 47b.

A pair of the proximal end flow path portions 41a, 41b are connected at each proximal end side opening portion to an inner end opening portion of the introduction nozzle 40b so as to communicate with the introduction nozzle 40b. Herein, a pair of the proximal end flow path portions 41a, 41b are formed to extend from the respective proximal end side opening portions along a front and rear direction of the manifold body 40a in opposite directions from each other.

Among the two pairs of intermediate flow path portions 42a, 42b; 43a, 43b, a pair of the intermediate flow path portions 42a, 42b are formed to extend from an extending end opening portion of the proximal end flow path portion 41a along a left and right direction of the manifold body 40a in opposite directions from each other, in order to communicate with the proximal end flow path portion 41a.

On the other hand, another pair of the intermediate flow path portions 43a, 43b are formed to extend from an extending end opening portion of the proximal end flow path portion 41b along the left and right direction of the manifold body 40a in opposite directions from each other, in order to communicate with the proximal end flow path portion 41b.

Among four pairs of the tip end flow path portions 44a, 44b; 45a, 45b; 46a, 46b; 47a, 47b, a pair of the tip end flow path portions 44a, 44b are formed to extend from an extending end opening portion of the intermediate flow path portion 42a along the front and rear direction of the manifold body 40a in opposite directions from each other, in order to communicate with the intermediate flow path portion 42a. On the other hand, a pair of the tip end flow path portions 45a, 45b are formed to extend from an extending end opening portion of the intermediate flow path portion 42b along the front and rear direction of the manifold body 40a in opposite directions from each other, in order to communicate with the intermediate flow path portion 42b.

Further, a pair of the tip end flow path portions 46a, 46b are formed to extend from an extending end opening portion of the intermediate flow path portion 43a along the front and rear direction of the manifold body 40a in opposite directions from each other, in order to communicate with the intermediate flow path portion 43a. On the other hand, a pair of the tip end flow path portions 47a, 47b are formed to extend from an extending end opening portion of the intermediate flow path portion 43b along the front and rear direction of the manifold body 40a in opposite directions from each other, in order to communicate with the intermediate flow path portion 43b.

In the flow-dividing type runner flow path 40c with the configuration described above, a molten resin introduced to the introduction nozzle 40b is divided in the front and rear direction in the manifold body 40a to flow into a pair of the proximal end flow path portions 41a, 41b. A molten resin flowing into the proximal end flow path portion 41a is divided in the left and right direction to flow into a pair of the intermediate flow path portions 42a, 42b. On the other hand, a molten resin flowing into the proximal end flow path portion 41b is divided in the left and right direction to flow into a pair of the intermediate flow path portions 43a, 43b.

Then, a molten resin flowing into the intermediate flow path portion 42a is divided in the front and rear direction to flow into a pair of the tip end flow path portions 44a, 44b. On the other hand, a molten resin flowing into the intermediate flow path portion 42b is divided in the front and rear direction to flow into a pair of distal end flow path portions 45a, 45b.

A molten resin flowing into the intermediate flow path portion 43a is divided in the front and rear direction to flow into a pair of the tip end flow path portions 46a, 46b. On the other hand, a molten resin flowing into the intermediate flow path portion 43b is divided in the front and rear direction to flow into a pair of the tip end flow path portions 47a, 47b.

A plurality of coil heaters 40d are provided in the manifold body 40a together with the flow-dividing type runner flow path 40c. As shown in FIG. 16, a plurality of the coil heaters 40d are constructed by upper and lower front coil heaters 40d and upper and lower rear coil heaters 40d.

The upper and lower front coil heaters 40d are arranged in a front portion of the manifold body 40a to oppose each other with the proximal end flow path portion 41a, a pair of the intermediate flow path portions 42a, 42b, a pair of the distal end flow path portions 44a, 44b, and a pair of the tip end flow path portions 45a, 45b of the flow-dividing type runner flow path 40c interposed therebetween. On the other hand, the upper and lower rear coil heaters 40d are arranged in a rear portion of the manifold body 40a to oppose each other with the proximal end flow path portion 41b, a pair of the intermediate flow path portions 43a, 43b, a pair of the tip end flow path portions 46a, 46b, and a pair of the tip end flow path portions 47a, 47b of the flow-dividing type runner flow path 40c interposed therebetween.

Herein, the upper front coil heater 40d of the upper and lower front coil heaters 40d is, as shown in FIG. 16, formed in a curved shape from the one end portion 48a of the one and other end portions 48a, 48b, which are placed in a right front portion of the manifold body 40a, to the other end portion 48b. The upper front coil heater 40d is connected at their end portions 48a, 48b to an upper front connector 49a in an electrically insulated state. In addition, the upper front connector 49a is provided at a substantial center portion of a right wall of the manifold body 40a in the front and rear direction of the manifold body 40a.

On the other hand, the lower front coil heater 40d is, as shown in FIG. 16, formed in a curved shape from the one end portion 48a of the one and other end portions 48a, 48b to the other end portion 48b. Herein, the one and other end portions 48a, 48b are placed under the one and other end portions 48a, 48b of the upper front coil heater 40d in the right front portion of the manifold body 40a.

The one and other end portions 48a, 48b of the lower front coil heater 40d are connected to a lower front connector 49a in a state insulated electrically from each other. In addition, the lower front connector 49a is provided under the upper front connector 49a in the front and rear directional center portion of the right wall of the manifold body 40a.

As shown in FIG. 16, the upper rear coil heater 40d of the upper and lower rear coil heaters 40d is formed in a curved shape from the one end portion 48a of the one and other end portions 48a, 48b, which are placed in a left rear portion of the manifold body 40a, to the other end portion 48b. Herein, the upper rear coil heater 40d is connected to an upper rear connector 49b at the one and other end portions 48a, 48b in a state electrically insulated from each other. In addition, the upper rear connector 49b is provided in the front and rear directional center portion of a left wall of the manifold body 40a.

On the other hand, the lower rear coil heater 40d is, as shown in FIG. 16, formed in a curved shape from the one end portion 48a of the one and other end portions 48a, 48b to the other end portion 48b. Herein, in the lower rear coil heater 40d, the one and other end portions 48a, 48b are placed under the one and other end portions 48a, 48b of the upper rear coil heater 40d in the left rear portion of the manifold body 40a. The lower rear coil heater 40d is connected to a lower rear connector 49b at the one and other end portions 48a, 48b in a state insulated electrically from each other. Additionally, the lower rear connector 49b is provided under the upper rear connector 49b in the front and rear directional center portion of the left wall of the manifold body 40a.

Thus, in the upper and lower front coil heaters 40d and the upper and lower rear coil heaters 40d, a heating voltage from a heating voltage applying device (not shown) is applied between the one end portion 48a and the other end portion 48b corresponding to the one end portion 48a, so that the coil heaters 40d are heated to a predetermined heating temperature. This means that the manifold body 40a is heated at its portion including the flow-dividing type runner flow path 40c to the predetermined heating temperature by the upper and lower front coil heaters 40d and the upper and lower rear coil heaters 40d.

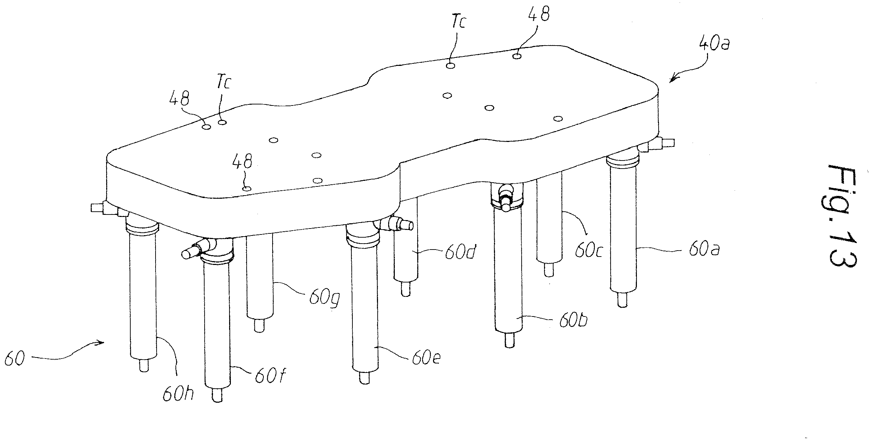

In the embodiment, when the heating temperature from the heating voltage applying device rises to the predetermined heating temperature, a plurality of thermocouple sensors Tc (see FIG. 13) detect the predetermined heating temperature and cut off the application of the heating voltage from the heating voltage applying device to the upper and lower front coil heaters 40d and the upper and lower rear coil heaters 40d.

Herein, as shown in FIG. 13, a plurality of the thermocouple sensors Tc are, as shown in FIG. 13, embedded in each recess portion 48 formed in the upper surface of the manifold body 40a. A plurality of the thermocouple sensors Tc detect respectively the temperature of respective portions of the manifold body 40a corresponding to the respective recess portions 48. In addition, the position of each of the recess portions 48 is determined so that the respective temperatures of portions in the manifold body 40a close to the flow-dividing type runner flow path 40c are substantially equal to each other.

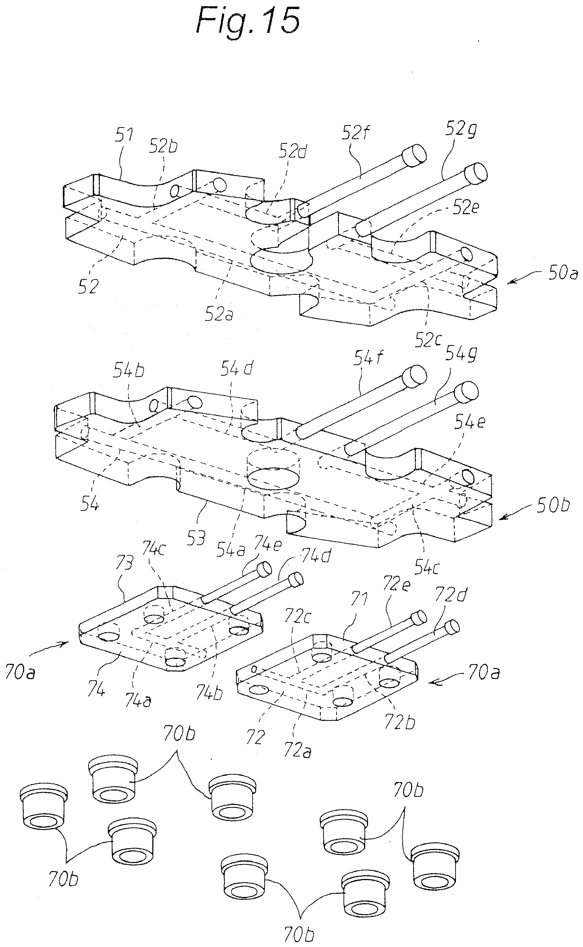

As shown in FIG. 15, the upper temperature control plate member 50a of the upper and lower temperature control plate members 50a, 50b includes an upper temperature control plate 51 and an upper oil flow circuit 52. The upper temperature control plate 51 is stacked on the upper surface of the manifold body 40a and formed to have an outline shape shown in FIG. 15.

As shown in FIG. 15, the upper oil flow circuit 52 is provided in the upper temperature control plate 51 along upper and lower surfaces of the upper temperature control plate 51 with an oil flow circuit configuration in which a plurality of oil pipes 52a to 52e are combined. Herein, the oil pipe 52a is provided in a left portion of the upper temperature control plate 51 in a front and rear direction. The oil pipes 52b, 52c are provided in the upper temperature control plate 51 in order to extend from front and rear portions of the oil pipe 52a in a right direction. The oil pipe 52d is provided in the upper temperature control plate 51 in order to extend from a right portion of the oil pipe 52b to a right-side center portion of the upper temperature control plate 51 in the right direction. Meanwhile, the oil pipe 52e is provided in the upper temperature control plate 51 so as to extend from a right portion of the oil pipe 52c to a center portion of the upper temperature control plate 51 in a left direction.

The upper oil flow circuit 52 also includes a front connecting pipe 52f and a rear connecting pipe 52g. The front connecting pipe 52f is extended from an extending end portion of the oil pipe 52d in the right direction to protrude from the right-side center portion of the upper temperature control plate 51 toward the right direction. On the other hand, the rear connecting pipe 52g is extended from an extending end portion of the oil pipe 52e in the right direction to protrude from the right-side center portion of the upper temperature control plate 51 toward the right direction.

In the upper oil flow circuit 52 with the configuration described above, the front and rear connecting pipes 52f, 52g are connected to the oil circulator C through front and rear pipes Ca (only a front pipe Ca is shown in FIG. 1). As the oil circulator C, an oil circulator of KCO III type manufactured by REIKEN Inc. is adopted. The oil circulator is connected at its outflow and inflow ports to the front and rear connecting pipe 52f, 52g of the upper oil flow circuit 52 through the front pipe Ca.

Thus, oil which is outflowed from the outflow port of the oil circulator C with the controlled oil temperature (for example, 320 (°C)) within a predetermined oil temperature range circulates from the front connecting pipe 52f of the upper oil flow circuit 52 through the oil pipes 52d, 52b, 52a, 52c, 52e and then returns from the rear connecting pipe 52g to the inflow port of the oil circulator C.

On the other hand, the lower temperature control plate member 50b includes a lower temperature control plate 53 and a lower oil flow circuit 54. The lower temperature control plate 53 is stacked on the lower surface of the manifold body 40a from below. The lower temperature control plate 53 is formed so as to have an outline shape (an outline shape similar to that of the upper temperature control plate 51) shown in FIG. 15.

The lower oil flow circuit 54 has, as shown in FIG. 15, an oil flow circuit configuration in which a plurality of oil pipes 54a to 54e are combined, and is provided in the lower temperature control plate 53 along upper and lower surfaces of the lower temperature control plate 53. The lower oil flow circuit 53 opposes the upper oil flow circuit 52 through the manifold body 40a.

Herein, the oil pipe 54a is provided in a left portion of the lower temperature control plate 53 in a front and rear direction of the lower temperature control plate 53. The oil pipes 54b, 54c are provided in the lower temperature control plate 53 so as to extend from front and rear portions of the oil pipe 54a toward a right direction. The oil pipe 54d is provided in the lower temperature control plate 53 so as to extend from a right portion of the oil pipe 54b to a right-side center portion of the lower temperature control plate 53 toward the right direction. Meanwhile, the oil pipe 54e is provided in the lower temperature control plate 53 in order to extend from a right portion of the oil pipe 54c to a center portion of the lower temperature control plate 53 toward a left direction.

The lower oil flow circuit 54 also includes a front connecting pipe 54f and a rear connecting pipe 54g. The front connecting pipe 54f is extended from an extending end portion of the oil pipe 54d in the right direction so as to protrude from the right-side center portion of the lower temperature control plate 53 toward the right direction. On the other hand, the rear connecting pipe 54g is extended from an extending end portion of the oil pipe 54e in the right direction so as to protrude from the right-side center portion of the lower temperature control plate 53 in the right direction.

In the lower oil flow circuit 54 constructed as described above, the front and rear connecting pipes 54f, 54g are connected to the oil circulator C through front and rear pipes Cb (only a front pipe Cb is shown in FIG. 1). The oil circulator C is connected at its outflow port and inflow ports to the front and rear connecting pipes 54f, 54g of the lower oil flow circuit 54.

Thus, oil which is outflowed from the outflow port of the oil circulator C with the controlled oil temperature described above circulates from the front connecting pipe 54f of the lower oil flow circuit 54 through the oil pipes 54d, 54b, 54a, 54c, 54e and then returns from the rear connecting pipe 54g to the inflow port of the oil circulator C.

The upper and lower oil flow circuits 52, 54 constructed as described above control to lower the temperature of the manifold body 40a heated by the coil heaters, thereby to lower the temperature of the manifold body 40a to a temperature within a predetermined temperature range of 150 (°C) to 200 (°C).

Next, the reason why the three-layer stacked structure centered on the manifold body 40a is introduced in the embodiment, as described above is explained.

As described above, the coil heaters 40d are provided in the manifold body 40a together with the flow-dividing type runner flow path 40c (see FIG. 16). Accordingly, a plurality of the coil heaters 40d have a function of heating the manifold body 40a and raising to a moldable temperature a molten resin flowing in the flow-dividing type runner flow path 40c.

However, a plurality of the coil heaters 40d have the function of increasing the temperature of the manifold body 40a by heating energies thereof as described above, but do not have a function of lowering the temperature of the manifold body 40a.

Further, a plurality of the coil heaters 40d are provided in the manifold body 40a together with the flow-dividing type runner flow path 40c in a distributed manner, as described above. Accordingly, there occurs a situation that the rising temperature of the manifold body 40a is not uniform over the entirety of the manifold body 40a and that different portions of the manifold body 40a become different temperatures from each other.

Meanwhile, the molten resin has a weak point of carbonizing, depending on the rising temperature of the molten resin. Generally, a resin material for molding used for resin molding is utilized for molding at a temperature much lower than a carbonization temperature thereof. Thus, there cannot occur a situation that the resin material for molding is carbonized in a molding process in a molten state thereof.

However, the molding temperature of PES contained in a predetermined resin material for molding used in the embodiment is high. The molding temperature of PES is lower than the carbonization temperature (for example, 400 (°C)) of PES but is a temperature close to the carbonization temperature. Therefore, there occurs a situation that in different portions of the manifold body 40a, the temperature of the molten resin flowing in the flow-dividing type runner flow path 40c rises to a temperature equal to or higher than the carbonization temperature of the molten resin or lowers to a temperature lower than the carbonization temperature.

In other words, there occurs a situation that the molten resin flowing in the flow-dividing type runner flow path 40c is heated by a plurality of the coil heaters 40d and rises to a temperature equal to or higher than the carbonization temperature in different portions of the flow-dividing type runner flow path 40c or lowers to a temperature lower than the carbonization temperature. As a result, the molten resin is partially carbonized in the flow-dividing type runner flow path 40c. This means that the molten resin loses good flowability thereof. It is thus impossible to mold an ultra-thin annular resin frame body with high quality using a molding resin material containing PES as a main component.

Therefore, the upper and lower temperature control plate member 50a, 50b is stacked on the manifold body 40a from its upper and lower sides, thereby to construct the three-layer stacked structure, as described above. And then, oil (having a temperature lower than the carbonization temperature of PES) from the oil circulator C. Oil (having a temperature lower than the carbonization temperature of PES) from the oil circulator C then circulates in the upper oil flow circuit 52 of the upper temperature control plate member 50a and the lower oil flow circuit 54 of the lower temperature control plate member 50b. Thus, the temperature of a portion of the manifold body 40a including at least the flow-dividing type runner flow path 40c is controlled to lower stably from a rising temperature by a plurality of the coil heaters 40d. As a result, the good flowability of the molten resin is secured while preventing carbonization of the molten resin.

As described above, the open nozzle group 60 constitutes the hot runner HR together with the flow-dividing type runner flow path 40c. Herein, the open nozzle group 60 is constructed with a plurality of open nozzles.

Herein, the reason why an open nozzle is used in the hot runner HR is explained. In a conventional hot runner, the injection speed of a resin injection molding machine is generally a speed at which a valve gate can be opened or closed with appropriate responsiveness, and thus the injection speed is not high. For this reason, the idea of adopting an open nozzle is completely unnecessary, and there is no example where an open nozzle which is an open gate was adopted.

However, when the injection speed of the resin injection molding machine is very high, opening and closing of a valve gate cannot follow the speed. Accordingly, the inventor has reached a unique and completely new idea of adopting an open nozzle which is not generally adopted in a hot runner.

As partially shown in FIG. 1 or 2, the open nozzle group 60 is formed to extend from the manifold body 40a via the manifold holding plate 20 and the fixed-side main mold 30 to a fixed-side nest 80 (described later).

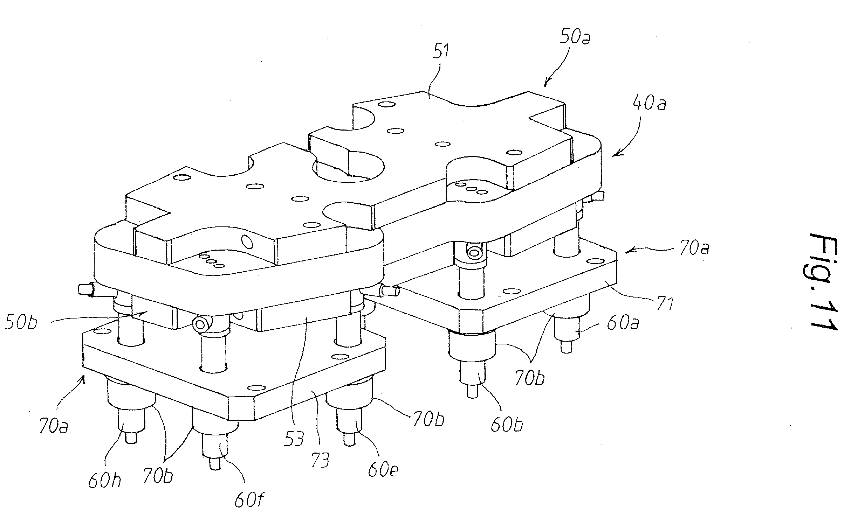

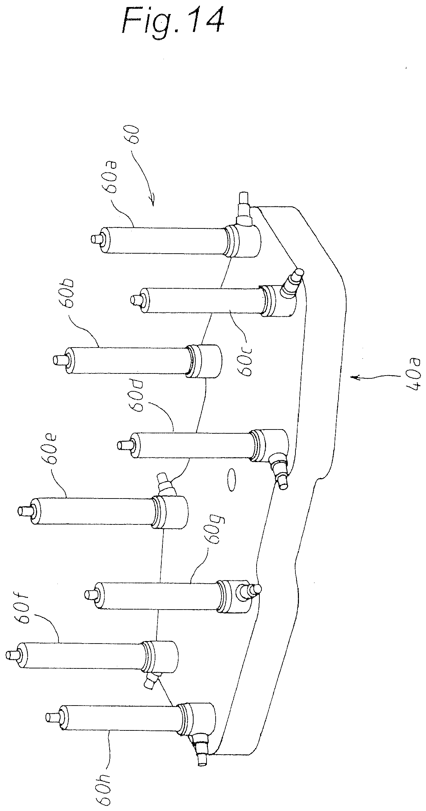

The open nozzle group 60 includes, as shown any of FIGS. 11 to 14, 16, and 17, four pairs of open nozzles 60a, 60b; 60c, 60d; 60e, 60f; 60g, 60h.

Herein, a pair of the open nozzles 60a, 60b are extended from the respective extending end opening portions of a pair of the tip or distal end flow path portions 44a, 44b so as to communicate with a pair of the distal end flow path portions 44a, 44b of the flow-dividing type runner flow path 40c.

A pair of the open nozzles 60c, 60d is, as shown in FIG. 17, extend from the respective extending end opening portions of a pair of the distal end flow path portions 45a, 45b so as to communicate with a pair of the distal end flow path portions 45a, 45b of the flow-dividing type runner flow path 40c.

A pair of the open nozzles 60e, 60f are extend from the respective extending end opening portions of a pair of the distal end flow path portions 46a, 46b so as to communicate with a pair of the distal end flow path portions 46a, 46b of the flow-dividing type runner flow path 40c.

A pair of the open nozzles 60g, 60h are extend from the respective extending end opening portions of a pair of the distal end flow path portions 47a, 47b so as to communicate with a pair of the distal end flow path portions 47a, 47b of the flow-dividing type runner flow path 40c.

In the hot runner HR with the configuration described above, a molten resin flowing from the introduction nozzle 40b into the manifold body 40a flows through the flow-dividing type runner flow path 40c and the open nozzles 60a, 60b; 60c, 60d; 60e, 60f; 60g, 60h of the open nozzle group 60 into the cavity described above.

Herein, a layout construction of each open nozzle of the hot runner HR is explained.

As described above, the predetermined molding resin material improves the flowability of PES, but does not have good flowability. Accordingly, the molding resin material does not necessarily have a satisfactory flow length. In addition, the flow length is the length of flow of the predetermined resin material for molding in its molten state from a distal end opening portion of each open nozzle. This flow length is mainly determined by characteristics of the predetermine resin material for molding.

The ultra-thin annular resin frame body has a very thin thickness of 0.3 (mm). Thus, the interior of the cavity of the hot runner mold device has also very thin thickness. Consequently, a molten resin cannot be filled into the entirety of the cavity, when a filling speed is low. Accordingly, the filling speed of the molten resin into the cavity is required to be very high.

For this reason, in the hot runner HR, the number and position of the open nozzles are predetermined by considering mainly the flowability of the predetermined resin material for molding and the high filling speed of the molten resin into the cavity. In the embodiment, it is necessary to have at least eight open nozzles. Thus, eight open nozzles are adopted. If the number of open nozzles is equal to or less than seven, it is impossible to fill the molten resin into the entirety of the cavity.

The arrangement position of each of the open nozzles with respect to the cavity is predetermined in connection with the construction of the cavity as described later in order to secure simultaneous filling of the molten resin from the open nozzles into the cavity and filling of the molten resin into the entirety of the cavity.

Herein, a temperature control configuration of the hot runner HR is explained. Front and rear open nozzle temperature control plate members 70a and a plurality of open nozzle temperature control bushes 70b are configured as follows and assembled to a plurality of the open nozzles 60a to 60h (see any of FIGS. 1, 2, 4, 11, and 12).

The front open nozzle temperature control plate member 70a of the front and rear open nozzle temperature control plate members 70a includes a front temperature control plate 71 and a front oil flow circuit 72. On the other hand, the rear open nozzle temperature control plate member 70a includes a rear temperature control plate 73 and a rear oil flow circuit 74 (see FIG. 15). In addition, the front and rear temperature control plates 71, 73 are formed of the similar material to the forming material of the manifold body 40a.

As shown in any of FIGS. 1, 2, 4, 11, 12 and 15, the front and rear temperature control plates 71 and 73 are formed respectively in a rectangular shape. The front and rear temperature control plates 71, 73 are, as shown in any of FIGS. 1, 2, and 4, accommodated in front upper and rear upper recess portions 32 of the fixed-side main mold 30, respectively. The front and rear upper recess portions 32 are formed in front and rear portions of the fixed-side main mold 30. In addition, the front upper and rear upper recess portions 32 are formed in a rectangular and recessed shape to front and rear portions of the fixed-side main mold 30 from an upper surface thereof.

The front oil flow circuit 72 has ,as shown in FIG. 15, an oil flow circuit configuration in which three oil paths 72a to 72c are combined, and is provided in the front temperature control plate 71 along upper and lower surfaces of the front temperature control plate 71.

Herein, the oil path 72a is provided in a left front portion of the front temperature control plate 71 in its front and rear direction. The oil path 72b is bent from a front end portion of the oil path 72a in an L-shape to extend toward a right wall of the front temperature control plate 71. The oil path 72c extends from an intermediate portion of the oil path 72a in a front and rear direction of the oil path 72a toward the right wall of the front temperature control plate 71 along the oil path 72b. In addition, front and rear connecting pipes 72d, 72e extend from the respective extending end portions of the front and rear oil paths 72b, 72c toward a right wall of the fixed-side main mold 30 in parallel to each other. The front and rear oil connecting pipes 72d, 72e are opened at the respective extending end portions outward from the right wall of the fixed-side main mold 30.

Meanwhile, the rear oil flow circuit 74 has an oil flow circuit configuration in which three oil paths 74a to 74c are combined, and is provided in the rear temperature control plate 73 along upper and lower surfaces thereof.

Herein, the oil path 74a is provided in a rear left portion of the rear temperature control plate 73 in a front and rear direction thereof. The oil path 74b extends from an intermediate portion of the oil path 74a in a front and rear direction of the oil path 74a toward the right wall of the rear temperature control plate 73 along the oil path 74c. The oil path 74c is bent from a rear end portion of the oil path 74a in an L-shape to extend toward a right wall of the rear temperature control plate 73. In addition, front and rear connecting pipes 74d, 74e extend from the respective extending end portions of the front and rear oil paths 74b, 74c toward the right wall of the fixed-side main mold 30 in parallel to each other. The front and rear oil connecting pipes 74d, 74e are opened at the respective extending end portions outward from the right wall of the fixed-side main mold 30.

In the front and rear oil flow circuits 72, 74 constructed in such a way, oil which is discharged from an oil supply device for open nozzles (not shown) with a temperature (for example, 250 (°C)) within a predetermined oil temperature range (for example, 200 (°C) to 300 (°C)) is supplied to the front connecting pipes 72d, 74d. In addition, the predetermined oil temperature range is an oil temperature range in which carbonization of a molten resin in the open nozzles 60a to 60h can be prevented in advance.

Accordingly, in the front oil flow circuit 72, the oil supplied from the oil supply device for open nozzles to the front connecting pipe 72d flows sequentially to the oil paths 72b, 72a, and 72c through the front connecting pipe 72d, and then returns from the rear connecting pipe 72e to the oil supply device for open nozzles. On the other hand, in the rear oil flow circuit 74, the oil supplied from the oil supply device for open nozzles to the front connecting pipe 74d flows sequentially to the oil paths 74b, 74a, and 74c through the rear connecting pipe 74e, and then returns from the rear connecting pipe 74e to the oil supply device for open nozzles.

In the front and rear open nozzle temperature control plate members 70a constructed in such a way, when the oil from the oil supply device for open nozzles flows in the front and rear oil flow circuits 72, 74 as described above, the front and rear temperature control plates 71, 72 rise at temperature thereof to a temperature equal to that of the oil from the oil supply device for open nozzles and control the temperature of a molten resin flowing in the open nozzles 60a to 60h so as to become 250 (°C).

Accordingly, the front and rear open nozzle temperature control plate members 70a act a roll for preventing the carbonization of the molten resin flowing in the open nozzles 60a to 60h.

A plurality of the open nozzle temperature control bushes 70b are respectively formed from a predetermined metal material for a bush so as to extend coaxially at their cylindrical portions from an annular flange portion as shown in FIG. 15. In addition, as the metal material for a bush, a metal material suitable for preventing the carbonization of the molten resin is adopted.

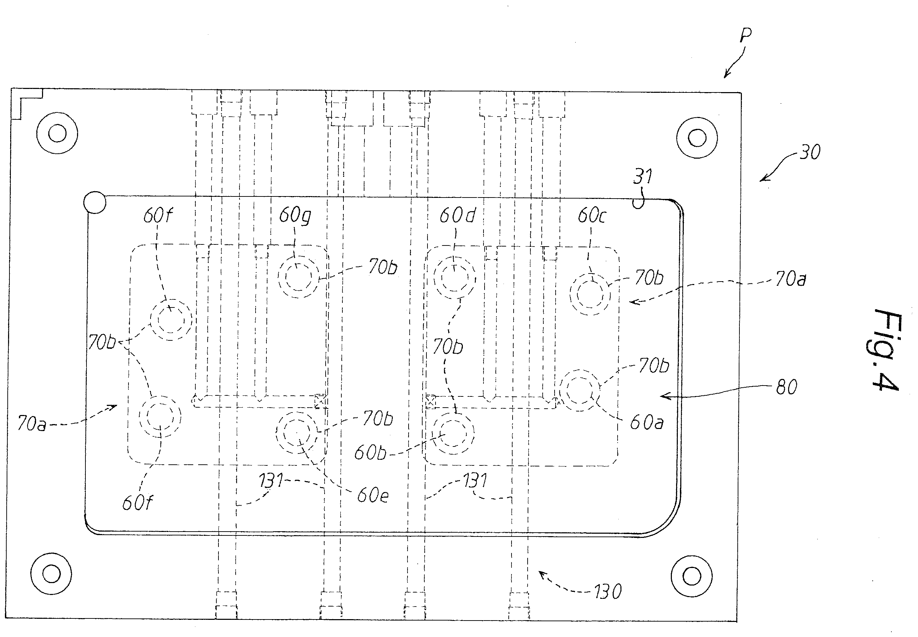

As shown in any of FIGS. 4, 11, and 12, among a plurality of the open nozzle temperature control bushes 70b, four open nozzle temperature control bushes 70b corresponding to the front open nozzle temperature control plate member 70a (hereinafter, also referred to as "four front open nozzle temperature control bushes 70b") are coaxially fitted into the open nozzles 60a to 60d immediately under the front temperature control plate 71.

As shown in any of FIGS. 4, 11, and 12, among a plurality of the open nozzle temperature control bushes 70b, four open nozzle temperature control bushes 70b corresponding to the rear open nozzle temperature control plate member 70a (hereinafter, also referred to as "four rear open nozzle temperature control bushes 70b") are coaxially fitted into the open nozzles 60e to 60h immediately under the rear temperature control plate 73.

According to a plurality of the open nozzle temperature control bushes 70b constructed in such a way, the open nozzle temperature control bushes 70b control the temperature of the molten resin in each of the open nozzles 60a to 60h so as to maintain the temperature of the molten resin in each of the open nozzles 60a to 60h at a temperature (for example 250 (°C)) useful for preventing the carbonization of the molten resin flowing in each of the open nozzles 60a to 60h in cooperation with temperature control by the front and rear temperature control plates 71, 73 of the front and rear open nozzle temperature control plate members 70a as described above.

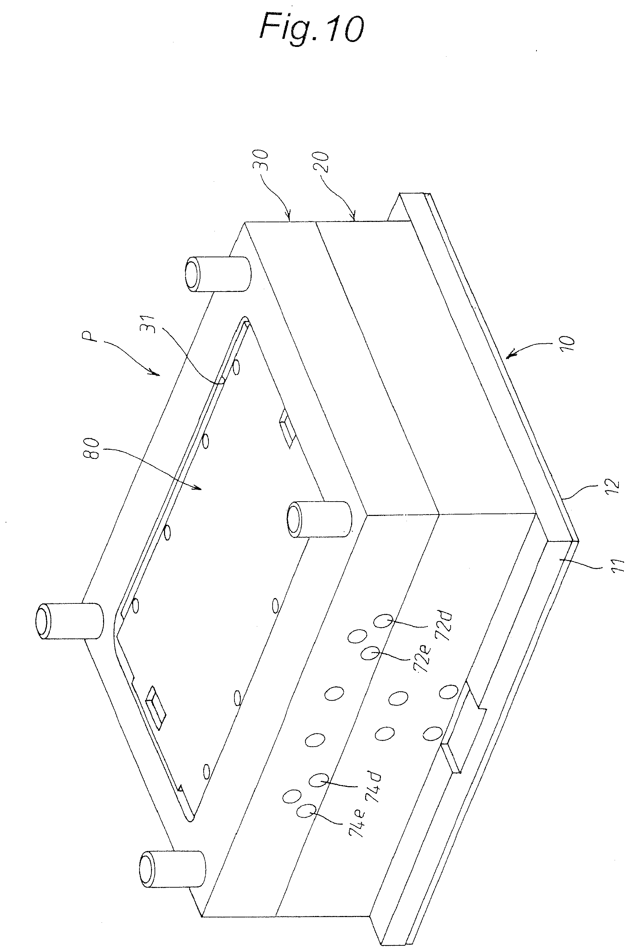

As shown in any of FIGS. 1 to 4 and 10, the fixed mold P includes the fixed-side nest 80. The fixed-side nest 80 is formed of a predetermined metal material for a nest in the form of a rectangular plate shape. In the embodiment, as the predetermined metal material for a nest, a special alloy manufactured by Materion Brush Japan Co. Ltd. which is suitable as a mold material for synthetic resin molding is adopted. Herein, the special alloy contains copper and beryllium and has high thermal conductivity and high strength. In addition, the predetermined metal material for a nest is not limited to the special alloy manufactured by Materion Brush Japan Co. Ltd. if it is alloys having high thermal conductivity and high strength. The predetermined metal material for a nest may be an alloy having at least high thermal conductivity of the high thermal conductivity and high strength.

The fixed-side nest 80 is accommodated in a lower recess portion 31 of the fixed-side main mold 30 (see FIGS. 1 and 4). Herein, the lower recess portion 31 is formed in the same shape as the outline shape of the fixed-side nest 80 so as to be capable of accommodating the fixed-side nest 80 into the fixed-side main mold 30 from its lower surface.

Accordingly, the fixed-side nest 80 is accommodated in the lower recess portion 31 of the fixed-side main mold 30 so that it locates at its lower surface in the same surface as a surface defining the parting line PL.

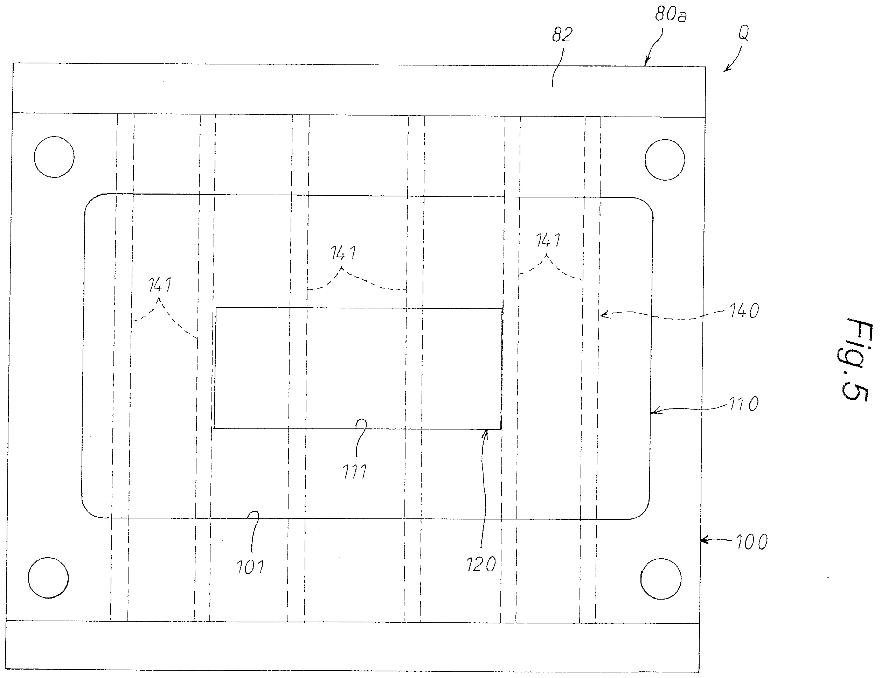

As shown in any of FIGS. 1, 2 and 5 to 7, the movable mold Q includes a movable-side mounting plate 80a formed of a metal material, a pair of spacers 90 formed of a metal material, and the movable-side main mold 100.

The movable-side mounting plate 80a includes an outer plate 81 and an inner plate 82. The inner plate 82 is stacked at its lower surface on the outer plate 81 from an upper surface of the outer plate 81.

A pair of spacers 90 are formed in a prismatic shape respectively and are attached respectively to left and right side portions of the movable-side mounting plate 80a in its front and rear direction.

The movable-side main mold 100 is attached through a pair of the spacers 90 to the movable-side mounting plate 80a. Thus, the movable-side main mold 100 provides a predetermined stroke interval between a lower surface of the movable-side main mold 100 and an upper surface of the inner plate 82 (hereinafter, also referred to as "an upper surface of the movable-side mounting plate 80a). Herein, the predetermined stroke interval corresponds to a stroke length of an ejector mechanism 180 (described later). In addition, the movable-side main mold 100 is formed of the predetermined metal material described above (for example, chromium molybdenum steel).

As shown in any of FIGS. 1, 2 and 18, the movable mold Q includes a movable-side nest member N. The movable-side nest member N includes a movable-side outer nest 110 and a movable-side inner nest 120. Additionally, the movable-side outer nest 110 and the movable-side inner nest 120 are formed of the above-mentioned predetermined metal material for a nest.

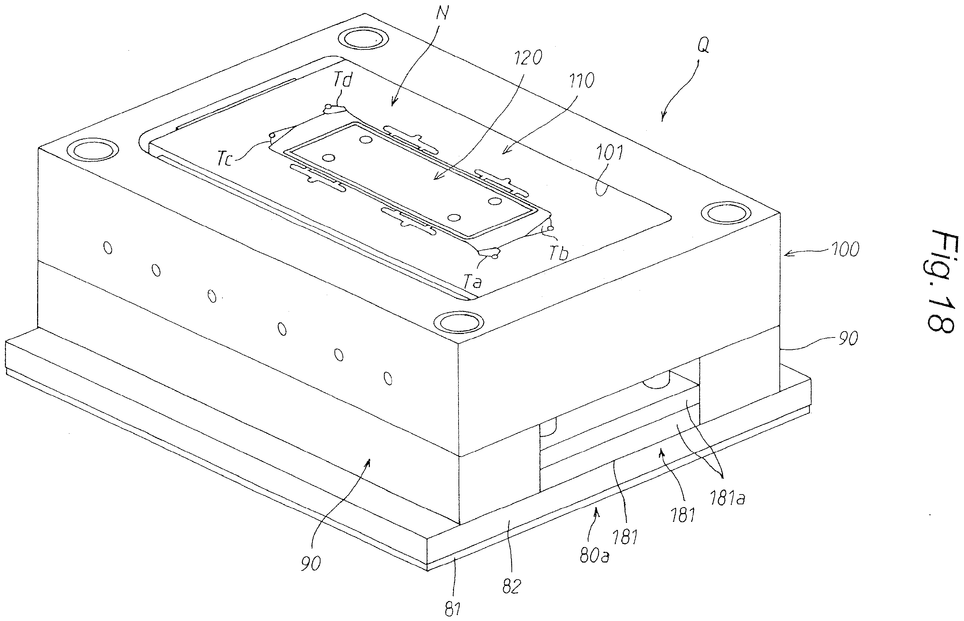

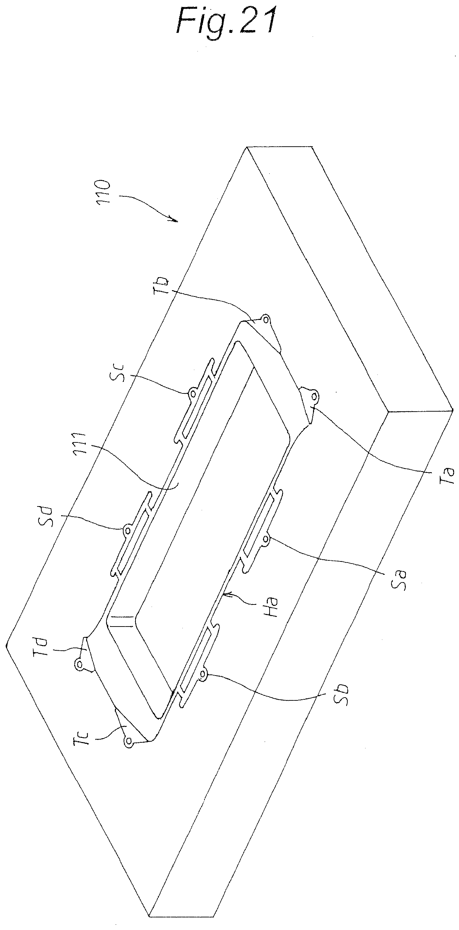

As shown in any of FIGS. 1, 2, 5, 18 and 21, the movable-side outer nest 110 is formed of the predetermined material for a nest in a rectangular plate shape. The movable-side outer nest 110 is, as shown in FIG. 18, accommodated in an accommodating hole portion 101 of the movable-side main mold 100. Herein, the accommodating hole portion 101 is formed in the same shape as the outline shape of the movable-side outer nest 110 so that the movable-side outer nest 110 can be accommodated in the movable-side main mold 100 from an upper surface of the movable-side main mold 100.

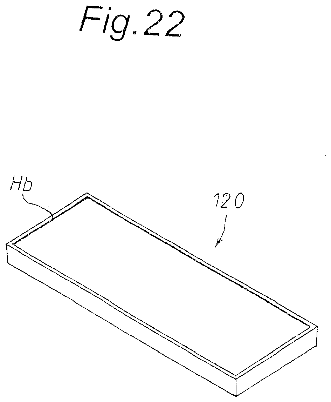

As shown in FIG. 22, the movable-side inner nest 120 is formed in a rectangular plate shape. The movable-side inner nest 120 is accommodated in the accommodating hole portion 101 of the movable-side outer nest 110 from an opening portion of the accommodating hole portion 101 so that it locates at its upper surface in the same surface as a surface defining the parting line PL (see FIG. 1 or 2).

Next, a configuration of a cavity which is required to mold an ultra-thin annular resin frame body serving as a molding target in the hot runner mold device M is explained.

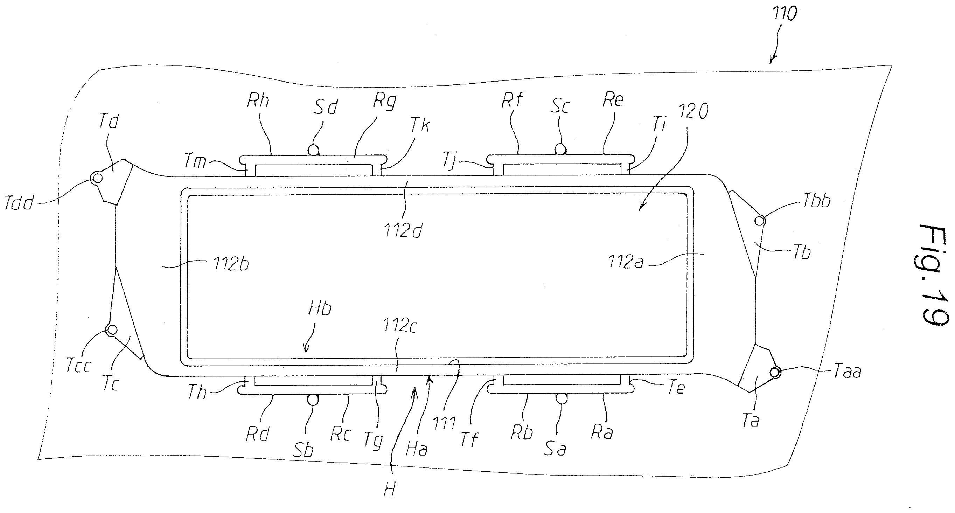

As shown in FIG. 19, a hollow H for molding of an ultra-thin annular resin frame body is formed at each upper surface of the movable-side outer nest 110 and the movable-side inner nest 120 over both of an inner peripheral edge portion of an opening portion of an accommodating hole portion 101 of the movable-side outer nest 110 and an outer peripheral edge portion of the movable-side inner nest 120.

In detail, the hollow H for molding is formed as a hollow for molding an ultra-thin annular resin frame body by an annular hollow Ha along the inner peripheral edge portion of the opening portion of the accommodating hole portion 111 of the movable-side outer nest 110 and an annular hollow Hb along the outer peripheral edge portion of the movable-side inner nest 120.

The annular hollow Ha is formed in an annular shape by front and rear recess portions 112a, 112b, and left and right recess portions 112c, 112d. The front recess portion 112a is formed to extend frontward from a front portion of the inner peripheral edge portion of the opening portion of the accommodating hole portion 111 in a wide and concave shape. The rear recess portion 112b is formed to extend rearward from a rear portion of the inner peripheral edge portion of the opening portion of the accommodating hole portion 111 in a wide and concave shape. The left recess portion 112c is formed along a left portion of the inner peripheral edge portion of the opening portion of the accommodating hole portion 111 in a narrow and concave shape. The right recess portion 112d is formed along a right portion of the inner peripheral edge portion of the opening portion of the accommodating hole portion 111 in a narrow and concave shape.

On the other hand, the annular hollow Hb is formed along the outer peripheral edge portion of the movable-side inner nest 120 in the form of an L-shaped cross-section. Additionally, in the embodiment, there is hardly any gap between an inner peripheral surface of the accommodating hole portion 111 of the movable-side outer nest 110 and an outer peripheral surface of the movable-side inner nest 120. Accordingly, the annular hollow Ha and the annular hollow Hb are substantially integrated to construct the hollow H for molding.

Both recess portions Ta, Tb for front tab-gate, both recess portions Tc, Td for rear tab-gate, four recess portions Te, Tf, Tg, Th for left tab-gate and four recess portions Ti, Tj, Tk, Tm for right tab-gate are formed at the upper surface of the movable-side outer nest 110 around the hollow H for molding so that a molten resin from the hot runner HR flows in the hollow H for molding.

In detail, the both front recess portions Ta, Tb for tab-gate are formed to extend frontward from left and right extending end portions of the front recess portion 112a in a substantially triangular and concave shape. The both front recess portions Ta, Tb for tab-gate are placed at the respective extending end portions Taa, Tbb so as to oppose the respective extending end opening portions (hereinafter, also referred to as "gate portions") of the open nozzles 60a, 60c of the hot runner HR from below.

The both rear recess portions Tc, Td for tab-gate are formed to extend rearward from left and right extending end portions of the rear recess portion 112b in a substantially triangular and concave shape. The rear recess portions Tc, Td for tab-gate are placed at the respective extending end portions Tcc, Tdd so as to oppose the respective extending end opening portions (hereinafter, also referred to as "gate portions") of the open nozzles 60f, 60h of the hot runner HR from below.

The four left recess portions Te, Tf, Tg, Th for tab-gate are arranged along the left recess portion 112c in a front and rear direction thereof at intervals. These left recess portions Te, Tf, Tg, Th for tab-gate are formed in a recessed shape so as to extend leftward from the left recess portion 112c at the respective arrangement positions.

The four right recess portions Ti, Tj, Tk, Tm for tab-gate are arranged along the right recess portion 112d in a front and rear direction thereof at intervals. These right recess portions Ti, Tj, Tk, Tm for tab-gate are formed in a recessed shape so as to extend rightward from the right recess portion 112d at the respective arrangement positions.

Four left recess portions Ra, Rb, Rc, Rd for flow-path and four right recess portions Re, Rf, Rg, Rh for flow-path are arranged on the upper surface of the movable-side outer nest 110 along the left and right recess portions 112c, 112d in front and rear directions thereof at intervals.

The left recess portion Ra for flow-path is formed on the upper surface of the movable-side outer nest 110 between the left recess portion Te for tab-gate and a left recessed connection portion Sa opposing the distal end opening portion of the open nozzle 60b of the hot runner HR. The left recess portion Ra for flow-path causes a molten resin flowing from the distal end opening portion of the open nozzle 60b to flow from the left recessed connection portion Sa to the left recess portion Te for tab-gate. Herein, the left recessed connection portion Sa is formed on the upper surface of the movable-side outer nest 110 between the left recess portions Te and Tf for tab-gate. The left recessed connection portion Sa is connected to the distal end opening portion (hereinafter, also referred to as "gate portion") of the open nozzle 60b from below.

The left recess portion Rb for flow-path is formed on the upper surface of the movable-side outer nest 110 between the left recess portion Tf for tab-gate and the left recessed connection portion Sa. The left recess portion Rb for flow-path causes the molten resin flowing from the distal end opening portion of the open nozzle 60b to flow from the left recessed connection portion Sa to the left recess portion Tf for tab-gate.

The left recess portion Rc for flow-path is formed on the upper surface of the movable-side outer nest 110 between the left recess portion Tg for tab-gate and a left recessed connection portion Sb opposing the distal end opening portion of the open nozzle 60e of the hot runner HR. The left recess portion Rc for flow-path causes a molten resin flowing from the distal end opening portion of the open nozzle 60e to flow from the left recessed connection portion Sb to the left recess portion Tg for tab-gate. Herein, the left recessed connection portion Sb is formed on the upper surface of the movable-side outer nest 110 between the left recess portions Tg, Th for tab-gate. The left recessed connection portion Sb is connected to the distal end opening portion (hereinafter, also referred to as "gate portion") of the open nozzle 60e from below.

The left recess portion Rd for flow-path is formed on the upper surface of the movable-side outer nest 110 between the left recess portion Th for tab-gate and the left recessed connection portion Sb. The left recess portion Rd for flow-path causes the molten resin flowing from the distal end opening portion of the open nozzle 60e to flow from the left recessed connection portion Sb to the left recess portion Th for tab-gate.

The right recess portion Re for flow-path is formed on the upper surface of the movable-side outer nest 110 between the right recess portion Ti for tab-gate and a right recessed connection portion Sc opposing the distal end opening portion of the open nozzle 60d of the hot runner HR. The right recess portion Re for flow-path causes a molten resin flowing from the distal end opening portion of the open nozzle 60d to flow from the right recessed connection portion Sc to the right recess portion Ti for tab-gate. Herein, the right recessed connection portion Sc is formed on the upper surface of the movable-side outer nest 110 between the right recess portions Ti, Tj for tab-gate. The right recessed connection portion Sc is connected to the distal end opening portion (hereinafter, also referred to as "gate portion") of the open nozzle 60d from below.

The right recess portion Rf for flow-path is formed on the upper surface of the movable-side outer nest 110 between the right recess portion Tj for tab-gate and the right recessed connection portion Sc. The right recess portion Rf for flow-path causes the molten resin flowing from the distal end opening portion of the open nozzle 60d to flow from the right recessed connection portion Sc to the right recess portion Tj for tab-gate.

The right recess portion Rg for flow-path is formed on the upper surface of the movable-side outer nest 110 between the right recess portion Tk for tab-gate and a right recessed connection portion Sd opposing the distal end opening portion of the open nozzle 60g of the hot runner HR. The right recess portion Rg for flow-path causes a molten resin flowing from the distal end opening portion of the open nozzle 60g to flow from the right recessed connection portion Sd to the right recess portion Tk for tab-gate. The right recessed connection portion Sd is formed on the upper surface of the movable-side outer nest 110 for tab-gate between the right recess portions for Tk, Tm. The right recessed connection portion Sd is connected to the distal end opening portion (hereinafter, also referred to as "gate portion") of the open nozzle 60g from below.

The right recess portion Rh for flow-path is formed on the upper surface of the movable-side outer nest 110 between the right recess portion Tm for tab-gate and the right recessed connection portion Sd. The right recess portion Rh for flow-path causes the molten resin flowing from the distal end opening portion of the open nozzle 60g to flow from the right recessed connection portion Sd to the right recess portion Tm for tab-gate.

Accordingly, when the movable mold Q is in contact with the fixed mold P under a state in which the movable-side inner nest 120 is accommodated in the accommodating hole portion111 of the movable-side outer nest 110, the movable mold Q constructs the cavity of the hot runner mold device M with the hollow H for molding (the annular hollow Ha of the movable-side outer nest 110 and the annular hollow Hb of the movable-side inner nest 120), the front recess portions Ta, Tb for tab-gate, the rear recess portions Tc, Td for tab-gate, the four left recess portions Te, Tf, Tg, Th for tab-gate , the four right recess portions Ti, Tj, Tk, Tm for tab-gate, the four left recess portions Ra, Rb, Rc, Rd for flow-path, the four right recess portions Re, Rf, Rg, Rh for flow-path, the left recessed connection portions Sa, Sb, and the right recessed connection portions Sc, Sd between these components and corresponding portions of the lower surface of the fixed-side nest 80 to these components. In addition, the cavity is herein referred to as a cavity CV (see FIG. 1).

The cavity CV constructed in such a way constructs a hollow space portion for molding of an ultra-thin annular frame body, each hollow space portion for tab gate, each hollow space portion for flow path, and a hollow space portion for recessed connection portion between the above mentioned hollow for molding, each recess portion for tab-gate, each recess portion for flow-path and each recessed connection portion and the above mentioned corresponding portion of the lower surface of the fixed-side nest 80. According to the embodiment, an ultra-thin annular resin frame body is formed in an annular shape, and thus the shape of the hollow space portion for molding of the cavity CV corresponds to the annular shape of the ultra-thin annular resin frame body.

In the embodiment, the ultra-thin annular resin frame body is formed in an ultra-thin plate shape with a thickness of, for example, 0.3 (mm). For this reason, the interior of the cavity CV is formed over its entirety with a thin thickness matching the thin thickness of the ultra-thin annular resin frame body.

Further, the cavity CV is coated at its inner surface by a coating treatment agent which is a coating treatment agent having a trade name of ARCTIC and containing aluminum titanium as a main component and manufactured by Oerlikon Nihon Balzers Coating Co., Ltd.. Herein, the coating process acts a role of enhancing the hardness of the inner surface of the cavity CV, thereby to suppress the wear of the inner surface of the cavity CV. In addition, if the coating treatment agent is not limited to the coating treatment agent manufactured by Oerlikon Nihon Balzers Coating Co., Ltd., if it is capable of enhancing the hardness of the inner surface of the cavity CV.

Accordingly, the fixed-side nest 80 and the movable-side nest member N are formed of the above described special alloy and coating is performed on the inner surface of the cavity CV, as is mentioned above, thereby to be capable of improving the flowability of the predetermined resin material for molding itself in combination or cooperation with improvement of LCP to the flowability of PES in the predetermined resin material for molding and improvement of GF to the surface hardness of PES.

Thus, the coating process performed on the inner surface of the cavity CV as described above, can maintain the flow speed of the predetermined resin material for molding in a molten state substantially in the injection speed of the predetermined resin material for molding in a molten state to the hot runner mold device in the inside of the hot runner HR and the inside of the cavity CV in cooperation with high thermal conductivity and strength of the predetermined metal material for a nest.

Next, configurations of a heater circuit and an oil flow circuit in the hot runner mold device M are described. In the embodiment, the heater circuit and the oil flow circuit are constructed to control the temperature of the hot runner mold device M appropriately at the time of molding an ultra-thin annular resin frame body.

As shown in FIG. 1 or 2, the hot runner mold device M includes a fixed-side heater cartridge mechanism 130 and a movable-side heater cartridge mechanism 140 as a heater circuit configuration.

The fixed-side heater cartridge mechanism 130 is, as shown in FIG. 1 or 2, provided in the fixed-side main mold 30. On the other hand, the movable-side heater cartridge mechanism 140 is provided in the movable-side main mold 100.

The fixed-side heater cartridge mechanism 130 is constructed by a plurality of heater rods 131. As shown in FIG. 1 or 2, a plurality of the heater rods 131 are inserted in the fixed-side main mold 30 so as to be arranged along the parting line PL at intervals. Thus, the fixed-side heater cartridge mechanism 130 heats the fixed-side main mold 30 together with the fixed-side nest 80 toward a predetermined fixed-side temperature by a plurality of heater rods 131 thereof. In the embodiment, the predetermined fixed-side temperature corresponds to a temperature within a predetermined fixed-side temperature range (130 (°C) to 250 (°C)), for example, 150 (°C). In addition, the predetermined fixed-side temperature range is a temperature range required for smooth flowing of a molten resin in the fixed-side main mold 30.

The movable-side heater cartridge mechanism 140 is constructed by a plurality of heater rods 141. As shown in FIG. 1 or 2, a plurality of the heater rods 141 are inserted in the movable-side main mold 100 so as to be arranged along the parting line PL at intervals. Thus, the movable-side heater cartridge mechanism 140 heats the movable-side main mold 100 together with the movable-side nest member N toward a predetermined movable-side temperature by a plurality of heater rods 141 thereof. In the embodiment, the predetermined movable-side temperature corresponds to a temperature, for example, 150 (°C) within a predetermined movable-side temperature range (130 (°C) to 250 (°C)). In addition, the predetermined movable-side temperature range is a temperature range required for smooth flowing of a molten resin in the movable-side main mold 100.

As shown in FIG. 1 or 2, the hot runner mold device M also includes a fixed-side oil flow circuit 150 and a movable-side oil flow circuit 160 as an oil flow circuit construction.

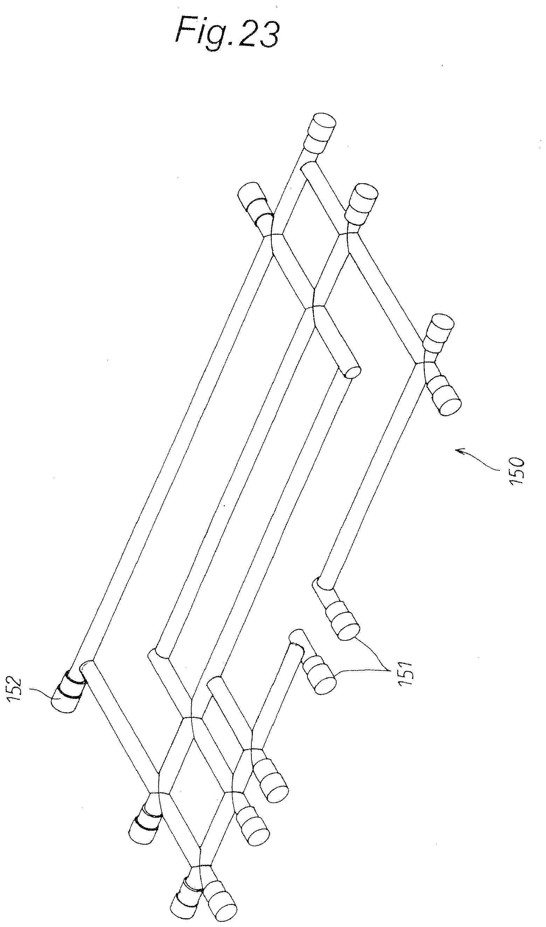

The fixed-side oil flow circuit 150 is, as can be seen from any of FIGS. 1 to 3, provided in the fixed-side nest 80 so as to be parallel to the parting line PL at an oil flow circuit construction in which a plurality of oil pipes are combined as shown in FIG. 23.

Accordingly, when the fixed-side oil flow circuit 150 is supplied at each inflow end opening portions 151 with oil of a predetermined oil temperature (for example, 150 (°C)) from a fixed-side oil circulation system (not shown), the oil flows in a plurality of the oil pipes of the fixed-side oil flow circuit 150 and returns to the fixed-side oil circulation system from outflow end opening portions 152 of the fixed-side oil flow circuit 150.

Herein, the fixed-side oil flow circuit 150 suppresses by oil thereof rise overdoing of temperature of the fixed-side main mold 30 caused by heating of the fixed-side heater cartridge mechanism 130, thereby to control and maintain the temperature of the fixed-side main mold 30 at the predetermined fixed-side temperature described above. Accordingly, it is possible to secure smooth flow of the molten resin in the fixed-side main mold 30 without carbonization. In addition, the fixed-side oil circulation system controls at its temperature adjustment circuit (not shown) the temperature of oil to the above-mentioned predetermined oil temperature.

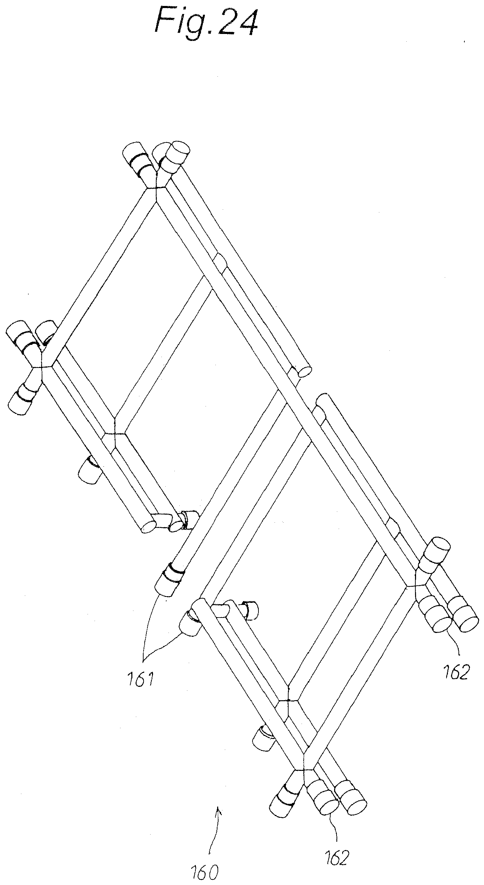

On the other hand, the movable-side oil flow circuit 160 is provided in the movable-side outer nest 110 to be parallel to the parting line PL at a two-stage oil flow circuit construction in which a plurality of oil pipes are combined as shown in FIG. 24.

Accordingly, when the movable-side oil flow circuit 160 is supplied at both inflow end opening portions 161 thereof with oil from a movable-side oil circulation system (not shown) under temperature control, the oil flows in a plurality of oil pipes of the movable-side oil flow circuit 160 and returns from outflow end opening portions 162 of the movable-side oil flow circuit 160 to the movable-side oil circulation system.

As described above, the fixed-side oil flow circuit 150 controls the temperature of the fixed-side nest 80 to a predetermined fixed-side nest temperature, thereby to control rise overdoing of heating temperature by the fixed-side heater cartridge mechanism 130. The movable-side oil flow circuit 160 controls the temperature of the movable-side outer nest 110 to a predetermined movable-side nest temperature, thereby to control rise overdoing of heating temperature by the movable-side heater cartridge mechanism 140.

Accordingly, the temperatures of the fixed-side main mold 30, fixed-side nest 80, movable-side main mold 100, and movable-side outer nest 110 are maintained at a temperature (for example, a temperature within a range of 140 (°C) to 250 (°C)) at which a molten resin smoothly flows in the fixed-side main mold 30, the fixed-side nest 80, the movable-side main mold 100, and the movable-side outer nest 110 without being carbonized.

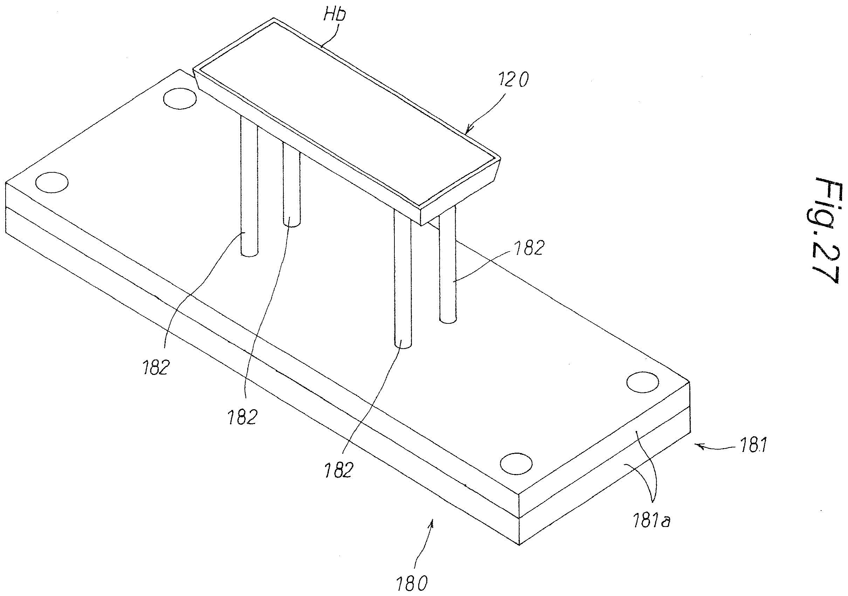

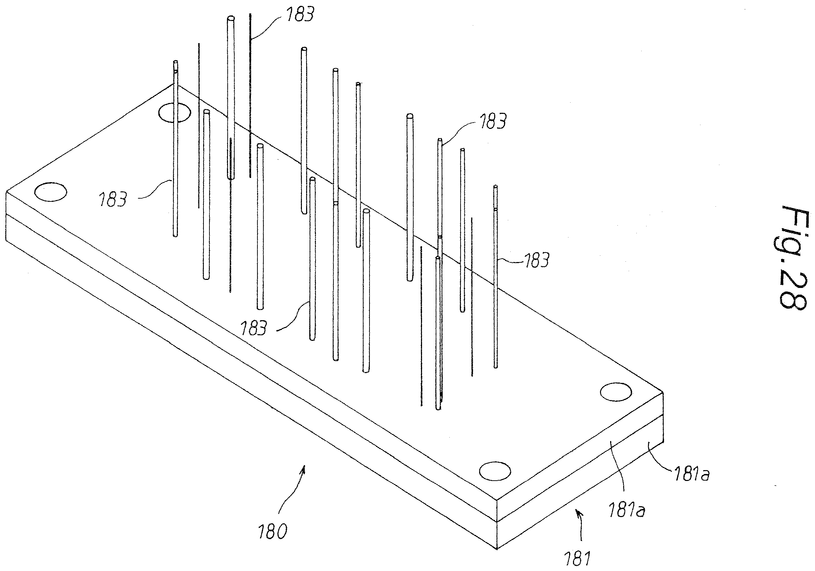

As can be seen from any of FIGS. 1, 2, 6, 7, 18, and 25 to 28, the hot runner mold device M includes an ejector mechanism 180.

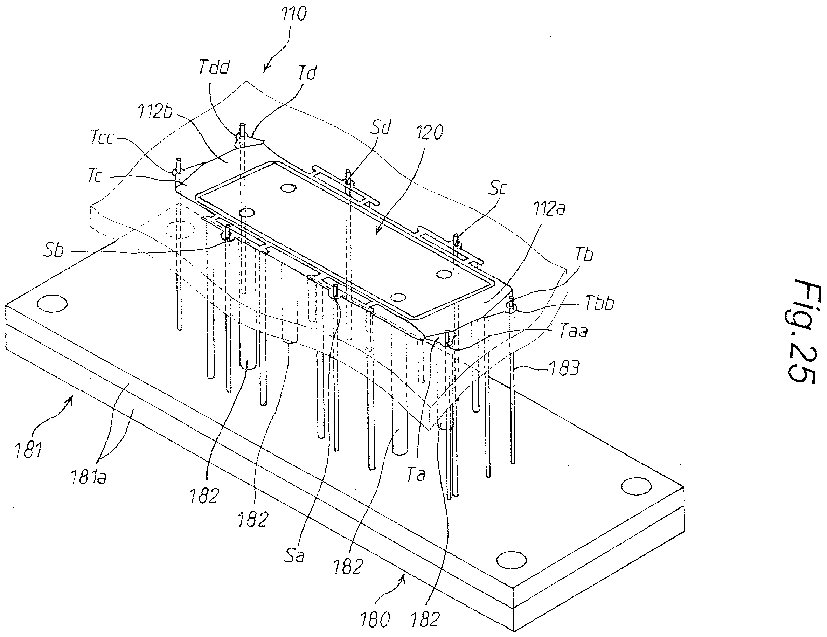

The ejector mechanism 180 includes, as shown in any of FIGS. 25 to 28, a push-up member 181, four push-up shafts 182, and a plurality of push-up pins 183.

The push-up member 181 is constructed by stacking upper and lower push-up plates 181a to each other. As shown in FIG. 1, the push-up member 181 is accommodated in a space Qa formed between the spacers 90 and also between the movable-side main mold 100 and the movable-side mounting plate 80a along a front and rear direction of the movable mold Q in a state where the upper push plate 181a is placed on the lower push plate 181a.

Herein, the push member 181 can be vertically moved in the space Qa between the movable-side main mold 100 and the movable-side mounting plate 80a along a thickness direction of each of the spacers 90. A vertical stroke length of the push member 181 (in other words, a stroke length of the ejector mechanism 180) corresponds to the predetermined stroke interval described above.

The four support rods 182 are stood between the push-up member 181 and the movable-side inner nest 120. The four support rods 182 are extended from the push-up member 181 toward corner portions of a rectangular center portion of the movable-side inner nest 120 to support the movable-side inner nest 120 from below.

Concretely, the four push-up shafts 182 are fitted at their lower end portions in the upper plate portion 181a of the upper and lower plate portions 181a of the push-up member. The four push-up shafts 182 are extended from their lower end portions through the movable-side main mold 100 and the movable-side outer nest 110 (see FIGS. 1 and 25). Herein, extending end portions of the four push-up shafts 182 are fixed to a lower surface of the movable-side inner nest 120.

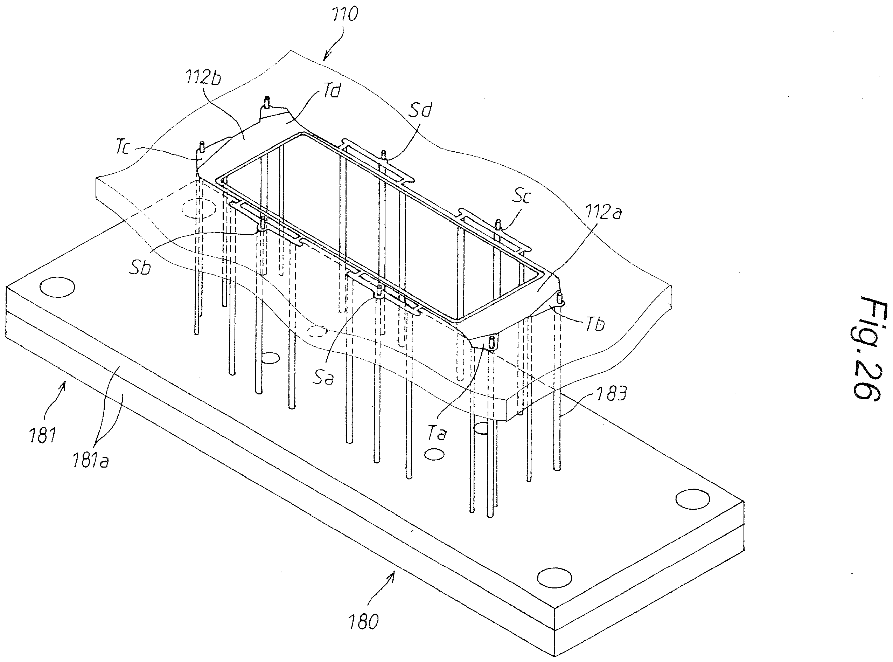

As shown in any of FIGS. 25 and 26,a plurality of push pins 183 are stood on the upper plate portion 181a so as to be positioned outside the four push-up shafts 182.

Concretely, a plurality of the push pins 183 are inserted through through-holes 181b of the upper plate portion 181a from below, as shown in FIG. 1. The respective push pins 183 are fixed at lower end portions thereof to the corresponding through-holes 181b. The push pins 183 extend from their lower end portions through the movable-side main mold 100 and the movable-side outer nest 110 toward the outside of the movable-side inner nest 120 (see FIG. 25).

Herein, a plurality of the push pins 183 are positioned at their extending end portions on an outer peripheral portion side of the movable-side inner nest 120 so as to abut against portions of the cavity corresponding to the distal end opening portions of a plurality of the open nozzles 60a to 60h from below. In addition, in the embodiment, extending positions of the push pins 183 from the upper plate portion 181a correspond to corresponding portions of the cavity CV to the distal end opening portions of the open nozzles 60a to 60h.

In the embodiment constructed as described above, an ultra-thin annular resin frame body is molded by the mold system as follows.

At this stage, as shown in any of FIGS. 1, 2, 6, and 7, it is assumed that the hot runner mold device M of the mold system engages at a molding surface of the movable-side main mold 100 of the movable mold Q with a molding surface of the fixed-side main mold 30 of the fixed mold P and is in a closed condition.

At this time, the fixed-side nest 80 is accommodated in the lower recess 31 of the fixed-side main mold 30. The movable-side outer nest 110 is also accommodated in an accommodating hole portion 91 of the movable-side main mold 100, and the movable-side inner nest 120 is accommodated in the accommodating hole portion 111 of the movable-side outer nest 110.

In the ejector mechanism 180, the push-up member 181 is placed at its lower push plate 181a on the movable-side mounting plate 80a in the space Qa (see FIG. 1).

In the fixed mold P, the upper and lower front coil heaters 40d which is provided together with the flow-dividing type runner flow path 40c in the manifold body 40a receive a heating voltage from the heating voltage applying device to be heated to the predetermined heating temperature. Accordingly, the manifold body 40a is heated by the upper and lower front coil heaters 40d and the upper and lower rear coil heaters 40d to the predetermined heating temperature at least in a portion including the flow-dividing type runner flow path 40c. In addition, when the heating temperature by the heating voltage applying device rises to the predetermined heating temperature, a plurality of thermocouple sensors Tc detect the predetermined heating temperature thereby to cut off the application of the heating voltage from the heating voltage applying device to the upper and lower front coil heaters 40d and the upper and lower rear coil heaters 40d. Accordingly, stopped is the heating of the portion of the manifold body 40a including at least the flow-dividing type runner flow path 40c.

In the embodiment, the manifold body 40a constitutes a three-layer stacked structure together with the upper and lower temperature control plates 51, 53 of the upper and lower temperature control plate members 50a, 50b, as described above,

Herein, in the upper temperature control plate member 50a, oil with the controlled oil temperature from the oil circulator C is circulated and supplied to the upper oil flow circuit 52. In the lower temperature control plate member 50b, oil with the controlled oil temperature from the oil circulator C is circulated and supplied to the lower oil flow circuit 54 through the front and rear pipes Cb. This means that the temperature of the upper and lower temperature control plates 51, 53 is controlled to the controlled oil temperature of the oil circulating in the upper and lower oil flow circuits 52, 54.

Accordingly, the temperature of the manifold body 40a heated by a plurality of the coil heaters (the temperature of a portion including at least the flow-dividing type runner flow path 40c of the manifold body 40a) is controlled so as to lower to a temperature within the predetermined temperature range of 150 (°C) to 200 (°C) according to the temperature of the upper and lower temperature control plates 51, 53.

As described above, the front and rear side open nozzle temperature control plate members 70a are mounted to the open nozzles 60a to 60h at the front and rear side temperature control plates 71, 73. Accordingly, the front and rear oil flow circuits 72, 74 circulates oil supplied from the open nozzle oil supply device, thereby to control the temperature of the front and rear temperature control plate 71, 73, consequently the temperature of a plurality of the open nozzles 60a to 60h, in other words, the temperature of a molten resin flowing in the open nozzles 60a to 60h as described later to, for example, 250 (°C) in order to prevent the carbonization of the molten resin.

A plurality of the open nozzle temperature control bushes 70b are assembled on the open nozzles 60a to 60h, as described above. Accordingly, a plurality of the open nozzle temperature control bushes 70b control and maintain the temperature of the molten resin in each of the open nozzles 60a to 60h at a temperature useful for preventing the carbonization of the molten resin flowing in each of the open nozzles 60a to 60h, for example, 250 (°C) in cooperation with temperature control by the front and rear temperature control plates 71, 73 of the front and rear open nozzle temperature control plate members 70a as described above.

The fixed-side heater cartridge mechanism 130 heats the fixed-side main mold 30 at the heater rods 131 under power supply from a power source device (not shown). Accordingly, the temperature of the fixed-side main mold 30 rises and is then transmitted to the manifold holding plate 20 and the fixed-side nest 80.

In the fixed-side oil flow circuit 150, oil is supplied from the fixed-side oil circulation system to each of the inflow end opening portions 151 and flows in each of the oil pipes. Consequently, the fixed-side oil flow circuit 150 controls the rising temperature of the fixed-side main mold 30 heated by the fixed-side heater cartridge mechanism 130 to the predetermined fixed-side nest temperature (a value within a range of 140 (°C) to 250 (°C)).

On the other hand, in the movable mold Q, the movable-side heater cartridge mechanism 140 heats the movable-side main mold 100 at the heater rods 141 under power supply from a power source device (not shown). Accordingly, the temperature of the movable-side main mold 100 rises and is then transmitted to the movable-side nest member N.

In the movable-side oil flow circuit 160, oil is supplied from the movable-side oil circulation system to the inflow end opening portions 161 and then flows in the oil pipes. Consequently, the movable-side oil flow circuit 160 controls the rising temperature of the movable-side outer nest 110 by heating of the movable-side heater cartridge mechanism 140 to the above-mentioned predetermined movable-side nest temperature (a value within a range of 140 (°C) to 250 (°C)).

As mentioned above, the temperature of a portion including at least the flow-dividing type runner flow path 40c of the manifold body 40a under the three-layer stacked structure and the temperature of a plurality of the open nozzles 60a to 60h under the front and rear open nozzle temperature control plate members 70a and a plurality of the open nozzle temperature control bushes 70b are controlled to a temperature capable of preventing carbonization of a molten resin, and the respective temperatures of the fixed-side main mold 30, fixed-side nest 80, movable-side main mold 100 and movable-side outer nest 110 are also controlled.

Accordingly, the hot runner HR, the movable-side inner nest 120 and the above-mentioned cavity can be maintained at a good moldable temperature while preventing the carbonization of the molten resin. This means that a molten resin injected from a resin injection molding machine (not shown), as described later can be controlled from an injection temperature, that is, a temperature within a predetermined injection temperature range to a good moldable temperature while preventing the carbonization of the molten resin, as described above.

In such a condition, when the resin injection molding machine injects from injection nozzle thereof the predetermined resin material for molding as a molten resin with a temperature (hereinafter, also referred to as an injection temperature) within the predetermined injection temperature range to the positioning locating ring 13 of the fixed-side mounting plate 10 of the hot runner mold device M at the predetermined high speed (a high injection speed), the molten resin flows from the introduction nozzle 40b into the manifold 40 at the high injection speed.

In the embodiment, the above-mentioned predetermined injection temperature range is, for instance, 360 (°C) or more and less than 400 (°C), preferably a temperature within a range of 360 (°C) to 390 (°C). Herein, the temperature lower than 400 (°C) is a temperature capable of suppressing or preventing carbonization of a molten resin, for example, a temperature within 380 (°C) ± 10 (°C). The injection temperature described above is, for example, 390 (°C). In addition, in the embodiment, as the resin injection molding machine, an injection molding machine of HSP450EH2 type manufactured by Sodick Co., Ltd. is exemplified.

Accordingly, the molten resin flows into the flow-dividing type runner flow path 40c of the hot runner HR (see FIG. 13) through the introduction nozzle 40b. At this time, the portion including at least the flow-dividing type runner flow path 40c of the manifold body 40a is controlled in temperature so as to prevent the carbonization of the molten resin flowing in the flow-dividing type runner flow path 40c with the controlled oil temperature of oil flowing in the upper and lower oil flow circuits 52, 54 of the upper and lower temperature control plate members 50a, 50b through the upper and lower temperature control plates 51, 53 under heating by the upper and lower front coil heaters 40d and the upper and lower rear coil heaters 40d, as previously described.

Thus, the molten resin flowing into the flow-dividing type runner flow path 40c is divided smoothly into a pair of the proximal end flow path portions 41a, 41b. The molten resins divided in this way flow through a pair of the proximal end flow path portions 41a, 41b in a front and rear direction of the manifold body 40a.

Subsequently, the molten resin from the proximal end flow path portion 41a is divided and flows into a pair of the intermediate flow portions 42a, 42b and then flows to the left and right of the manifold body 40a. On the other hand, the molten resin from the proximal end flow path portion 41b is divided and flows into a pair of the intermediate flow path portions 43a, 43b, and then flows to the left and right of the manifold body 40a.

Thereafter, the molten resin from the intermediate flow path portion 42a is divided and flows into a pair of the distal end flow path portions 44a, 44b, and the molten resin from the intermediate flow path portion 42b is divided and flows into a pair of the distal end flow path portions 45a, 45b. The molten resin from the intermediate flow path portion 43a is divided and flows into a pair of the distal end flow path portions 46a, 46b, and the molten resin from the intermediate flow path portion 43b is divided and flows into a pair of the distal end flow path portions 47a, 47b.

In this way, the molten resin from the resin injection molding machine is divided in the interior of the flow-dividing type runner flow path 40c, thereby to flow throughout the entirety of the interior of the manifold body 40a. Herein, the manifold body 40a is controlled to a temperature capable of preventing the carbonization of the molten resin, as described above. Thus, the molten resin in the flow-dividing type runner flow path 40c flows while maintaining a good molten state.

When the molten resin flows in the flow-dividing type runner flow path 40c, as described above, the molten resin then flows from the flow-dividing type runner flow path 40c into a plurality of the open nozzles 60a to 60h. At this time, a plurality of the open nozzle temperature control bushes 70b control and maintain the temperature of the molten resin in each of the open nozzles 60a to 60h at a temperature useful for preventing the carbonization of the molten resin flowing in the open nozzles 60a to 60h, for example, 250 (°C), in cooperation with the temperature control by the three-layer stacked structure.

Thus, the molten resins flowing into a pair of the distal end flow path portions 44a, 44b of the flow-dividing type runner flow path 40c respectively flow smoothly into a pair of the open nozzles 60a, 60b. The molten resins flowing into a pair of the distal end flow path portions 45a, 45b flow respectively into the open nozzles 60c, 60d, the molten resins flowing into a pair of the distal end flow path portions 46a, 46b flow respectively into the open nozzles 60e, 60f, and the molten resins flowing into a pair of the distal end flow path portions 47a, 47b flow respectively into the open nozzles 60g, 60h.

Thereafter, the molten resins flowing into the open nozzles 60a, 60b, 60c, 60d, 60e, 60f, 60g and 60h flow respectively from the distal end opening portions of the open nozzles 60a, 60b, 60c, 60d, 60e, 60f, 60g and 60h into the extending end portion Taa of the recess portion Ta for the front tab-gate, the left side recessed connection or coupling portion Sa, the extending end portion Tbb of the recess portion Tb for the front tab-gate, the right side recessed connection or coupling portion Sc, the left side recessed connection or coupling portion Sb, the extending end portion Tcc of the recess portion Tc for the rear tab-gate, the right side recessed connection or coupling portion Sd, and the extending end portion Tdd of the recess portion Td for the rear tab-gate of the cavity in a good molten state without being carbonized.

Then, the molten resins flowing into the extending end portion Taa of the recess portion Ta for the front tab-gate and the extending end portion Tbb of the recess portion Tb for the front tab-gate respectively flow into the front recess portion 112a through the recess portion Ta for the front tab-gate and the recess portion Tb for the front tab-gate. On the other hand, the molten resins flowing into the extending end portion Tcc of the recess portion Tc for the rear tab-gate and the extending end portion Tdd of the recess portion Td for the rear tab-gate respectively flow into the rear recess portion 112b through the recess portion Tc for rear tab-gate and the recess portion Td for the rear tab-gate.

The molten resin flowing into the left side recessed connection portion Sa flows into the recess portions Te, Tf for the left tab-gate, and the molten resin flowing into the left side recessed connection portion Sb flows into the recess portions Tg, Th for the left tab-gate. The molten resin flowing into the right side recessed connection portion Sc flows into the recess portions Ti, Tj for the right tab-gate, and the molten resin flowing into the right side recessed connection portion Sd flows into the recess portions Tk, Tm for the right tab-gate.

Subsequently, the molten resins flowing into the recess portions Te, Tf for the left tab-gate flow into the left front side portion of the annular hollow or recess Hb, and the molten resins flowing into the recess portions Tg, Th for the left tab-gate flow into the left rear side portion of the annular recess Hb. On the other hand, the molten resins flowing into the recess portions Ti, Tj for the right tab-gate flow into the right front side portion of the annular hollow or recess Hb, and the molten resins flowing into the recess portions Tk, Tm for the right tab-gate flow into the right rear side portion of the annular hollow or recess Hb.

The molten resins flowing from the recess portions Ta, Tb, Tc, Td, Te, Tf, Tg, Th, Ti, Tj, Tk and Tm for the tab-gate in this way are filled well into the molding hollow or recess H without being carbonized.

Herein, the arrangement positions of a plurality of the above-mentioned hollow portions for filling in the cavity, the number of the hollow portions for filling and the number of the open nozzles are predetermined according to at least the thickness and width of the cavity and the injection speed and flow length of the molten resin.

Thus, the molten resins flowing from the recess portions Ta, Tb, Tc, Td, Te, Tf, Tg, Th, Ti, Tj, Tk and Tm for the tab-gate are simultaneously filled into the hollow H for molding, and the molten resins from adjacent recess portions for the tab-gate join at the same timing. Accordingly, even though the cavity is thin and wide according to the thickness and width of an ultra-thin annular frame body, the molten resin can be satisfactorily filled into the cavity without being carbonized.

In this instance, filling of the molten resin from the resin injection molding machine into the cavity in a few seconds under the above-mentioned injection speed. This means that the molten resin injected from the resin injection molding machine at the predetermined injection temperature is molded in the cavity in the predetermined filling time (for example, a time within a range of 0.01 (sec) to 0.4 (sec)) after its injection.

Thereafter, the hot runner mold device M cools the molten resin from a temperature within a range of 360 (°C) or higher to less than 400 (°C) (preferably, a temperature within a range of 360 (°C) to 390 (°C)) to a mold temperature (for example, 150 (°C)), thereby to form an ultra-thin resin molded body in the cavity CV.

Sequentially, in a state where the movable mold Q is opened from the fixed mold P, when the push-up member 181 of the ejector mechanism 180 is moved within the space Qa toward the movable-side main mold 100, the support rods 182 are also moved together with the push-up pins 183 in the same direction in conjunction with the movement of the push-up member 181.

Thus, the movable-side inner nest 120 is ejected together with the ultra-thin resin molded body by the support rods 182 and the push-up pins 183 from the movable-side outer nest 110 outward.

Herein, the movable-side inner nest 120 is supported by the support rods 182 from below, as described above. And, the ultra-thin resin molded body is supported by the push-up pins 183 from below at the extending end portion Taa of the recess portion Ta for the front tab-gate, the extending end portion Tbb of the recess portion Tb for the front tab-gate, the extending end portion Tcc of the recess portion Tc for rear tab-gate, the extending end portion Tdd of the recess portion Td for the rear tab-gate, the left side recessed connection portion Sa, the left side recessed connection portion Sb, the right side recessed connection portion Sc, and the right side recessed connection portion Sd (see FIG. 25).

Accordingly, along with the movement of the above-described push-up member 181, pushing out of the ultra-thin resin molded body from the movable-side outer nest 110 by the push-up pins 183 is done simultaneously with pushing out of the movable-side inner nest 120 from the movable-side outer nest 110 by the support rods 182.

As described above, the ultra-thin resin molded body is ejected or pushed out not solely but together with the movable-side inner nest 120. Thus, even though the ultra-thin resin molded body is very thin, the ultra-thin resin molded body can be ejected or push out successfully without breakage.

In such a condition, the ultra-thin resin molded body is taken out of the movable-side inner nest 120 and a portion other than the ultra-thin annular resin frame body is removed, an ultra-thin annular resin frame body for a separator of a hydrogen battery utilizing the above-mentioned predetermined molding resin material can be molded successfully in the hot runner mold device M without being broken.

Herein, as described above, the molten resin in the flow-dividing type runner flow path 40c flows smoothly into a plurality of the open nozzles 60a to 60h under the temperature control by the three-layer structure without being carbonized. Then, the temperature of the molten resins flowing into a plurality of the open nozzles 60a to 60h is controlled to a temperature not causing carbonization by the front and rear side open nozzle temperature control plate members 70a and a plurality of the open nozzle temperature control bushes 70b.

Accordingly, the molten resins from a plurality of the open nozzles 60a to 60h are filled successfully into the cavity CV without being carbonized, and then the ultra-thin annular resin frame body is molded without being carbonized. The ultra-thin annular resin frame body molded without being carbonized in such a way can be mass-produced as an ultra-thin annular resin frame body with high quality and good yield, if the molding mold system is utilized.

In addition, in embodying the present invention, the present invention is not limited to the embodiment and the following modifications are exemplified.
(1) In embodying the present invention, the thickness of the ultra-thin annular resin frame body described in the embodiment is not limited to 0.3 (mm) and may be a thickness within a predetermined ultra-thickness range, that is, a range of 0.1 (mm) to 0.5 (mm). Therefore, the thickness of a cavity of a hot runner mold device is also not limited to 0.3 (mm) and may be a thickness within the predetermined ultra-thickness range according to the thickness of the ultra-thin annular resin frame body.
(2) In embodying the present invention, in a case where the ultra-thin annular resin frame body described in the embodiment is molded not only as an ultra-thin annular resin frame body for a separator of a hydrogen battery but also as various ultra-thin annular resin frame bodies for other products different from the separator of a hydrogen battery, the hot runner mold device M or the mold system can be applied.

### Explanation of reference numerals:

10 ··· fixed-side mounting plate, 20 ··· manifold holding plate,
30 ··· fixed-side main mold, 31 ··· lower recess, 40 ··· manifold,
50a ··· upper temperature control plate member,
50b ··· lower temperature control plate member,
51 ··· upper temperature control plate, 52 ··· upper oil flow circuit,
53 ··· lower temperature control plate, 54 ··· lower oil flow circuit,
40a ··· manifold body, 40c ··· flow-dividing type runner flow path,
40d ··· coil heater, 60a-60h ··· open nozzle,
70a ··· open nozzle temperature control plate member,
70b ··· open nozzle temperature control bush,
80a ··· movable-side mounting plate, 90 ··· spacer,
100 ··· movable-side main mold,
101 ··· accommodating hole portion,
110 ··· movable-side outer nest, 120 ··· movable-side inner nest,
130 ··· fixed-side heater cartridge mechanism,
140 ··· movable-side heater cartridge mechanism,
150 ··· fixed-side oil flow circuit, 160 ··· movable-side oil flow circuit,
180 ··· ejector mechanism, 181 ··· push-up member, 182 ··· support rod,
183 ··· push-up pin, C··· oil circulator, CV ··· cavity, HR ··· hot runner,
N ··· movable-side nest member, P ··· fixed mold, Q ··· movable mold,
Qa ··· space

## Claims

1. A hot runner mold device (M) for molding of an ultra-thin annular resin body, comprising:
a fixed mold (P) including a fixed-side body (10, 20, 30, 40) formed from a predetermined mold metal material so as to include a manifold (40) having a manifold body (40a); and
a movable mold (Q) including a movable-side body (80a, 90, 100) formed from the predetermined mold metal material so as to have a molding surface abutting against a molding surface of said fixed-side body,
wherein said fixed mold includes:
a fixed-side nest (80) formed of a predetermined metal material for a nest, said fixed-side nest being accommodated in a molding-surface side accommodating hole portion (31) formed in said fixed-side body from its molding surface;
a hot runner (HR) including a runner flow path (40c) provided in said manifold body and to which a predetermined molding resin material is injected as a molten resin from a resin injection molding machine, and a plurality of nozzles (60a to 60h) extending from a plurality of outflow path portions formed in said runner flow path toward the molding surface of said fixed-side body through the interior thereof, said hot runner flowing to a plurality of said nozzles the molten resin flowing through said runner flow path and flowing out from a plurality of the outflow path portions of said runner flow path,
a heater (40d) provided in said manifold body together with said runner flow path to heat said manifold body, and
both side temperature control plate members including both side temperature control plates stacked on said manifold body from both surfaces thereof, and both side oil flow circuits included respectively in said both side temperature control plates, said both side oil flow circuits flowing oil at an oil temperature within a predetermined oil temperature range suitable for preventing carbonization of the molten resin to control a temperature of a portion including at least said runner flow path of said manifold body heated by said heater to a temperature suitable for preventing the carbonization of the molten resin through said both side temperature control plates (50a, 50b),
wherein said movable mold includes:
a movable side body (80a, 90, 100) formed of a metal material, and
a movable side nest member (N, 110, 120) formed of the predetermined metal material for a nest, said movable side nest member being accommodated in a molding-surface side accommodating hole portion (101) formed in said movable-side body from its molding surface, and
wherein a cavity (CV) is constructed to mold an ultra-thin annular resin body at a thickness within a predetermined ultra-thickness range on a basis of the molten resin from a plurality of said nozzles between said movable-side nest member and said fixed-side nest, when said movable-side body abuts at its molding surface against the molding surface of said fixed-side body so that said movable-side nest member abuts against said fixed-side nest.

2. The hot runner mold device for molding of an ultra-thin annular resin body according to claim 1, further comprising:
a fixed-side temperature control means (130, 150) for controlling temperatures of said fixed-side body and said fixed-side nest to a predetermined fixed-side temperature;
a movable-side temperature control means (140, 160) controlling temperatures of said movable-side body and said movable-side nest member to a predetermined movable-side temperature; and
a nozzle temperature control means (70a, 70b) for controlling a temperature so as to prevent carbonization of a molten resin flowing in a plurality of said nozzles.

3. The hot runner mold device for molding of an ultra-thin annular resin body according to claim 2,
wherein said hot runner includes a plurality of said nozzles as a plurality of open nozzles (60a to 60h), and
wherein when the molten resin is injected from the resin injection molding machine at a predetermined high injection speed, the molten resin flows through said hot runner on a basis of the predetermined high injection speed and flows into a plurality of said open nozzles from a plurality of the outflow path portions thereof.

4. The hot runner mold device for molding of an ultra-thin annular resin body according to claim 3, wherein the predetermined molding resin material contains super engineering plastics.

5. The hot runner mold device for molding of an ultra-thin annular resin body according to claim 4,
wherein the predetermined metal material for a nest is an alloy having at least high thermal conductivity, and
said cavity is coated on its inner surface by a predetermined coating agent increasing hardness so as to improve flowability of the molten resin.

6. The hot runner mold device for molding of an ultra-thin annular resin body according to claim 5, wherein the predetermined ultra-thickness range is 0.1 mm to 0.5 mm.

7. The hot runner mold device for molding of an ultra-thin annular resin body according to claim 1, further comprising:
an ejector mechanism (180) including:
a push-up member (181) accommodated displaceably in a space (Qa) formed so as to oppose said fixed-side nest through said movable-side nest member in said movable-side body in a direction from the space to said movable-side nest member or in its opposite direction,
a plurality of support rods (182) extended from said push-up member toward said movable-side nest member through the space in said movable-side body, a plurality of said support rods displacing in their axial directions together with said push-up member, and
a plurality of push-up pins (183) extended at outer peripheral sides of said support rods in said movable-side body from said push-up member through the space to support the cavity at a plurality of outside portions (Ta, Tbb, Tcc, Tdd, Sa, Sb, Sc, Sd) of the cavity from below,
wherein said movable-side nest member includes:
a movable-side outer nest (110) accommodated in the accommodating hole portion of said movable-side body; and
a movable-side inner nest accommodated in an accommodating hole portion formed in said movable-side outer nest from the molding surface of said movable-side body, said movable-side inner nest (120) being supported by a plurality of said support rods from below.

8. The hot runner mold device for molding of an ultra-thin annular resin body according to claim 7, wherein said hot runner includes a plurality of said nozzles as a plurality of open nozzles,
wherein when a molten resin is injected from the resin injection molding machine at a predetermined high injection speed, said hot runner causes the molten resin to flow into the runner flow path at the predetermined high injection speed and to flow from the outflow path portions thereof into a plurality of said open nozzles.

9. The hot runner mold device for molding of an ultra-thin annular resin body according to claim 8, wherein the predetermined molding resin material contains super engineering plastics.

10. The hot runner mold device for molding of an ultra-thin annular resin body according to claim 9, wherein the predetermined metal material for a nest is an alloy having at least high thermal conductivity,
the cavity is coated at its inner surface with a predetermined coating agent increasing hardness so as to improve flowability of the molten resin, and
the predetermined ultra-thickness range is 0.1 mm to 0.5 mm.

11. A mold system equipped with a hot runner mold device for molding of an ultra-thin annular body according to claim 1, wherein
wherein said hot runner includes a plurality of said nozzles as a plurality of open nozzles (60a to 60h),
wherein said fixed mold further includes:
a fixed-side temperature control means (130, 150) for controlling each temperature of said fixed-side body and said fixed-side nest to a predetermined fixed-side temperature, and
a nozzle temperature control means (70a, 70b) for controlling a temperature so as to prevent carbonization of a molten resin flowing in a plurality of said open nozzles,
wherein said movable mold further includes:
a movable-side temperature control means (140, 160) for controlling each temperature of said movable-side body and said movable-side nest member to a predetermined movable-side temperature, and
an oil circulator for circulates oil through said both-side oil flow circuits of said both-side temperature control plate members of said hot runner mold device at an oil temperature within the predetermined oil temperature range suitable for preventing the carbonization of the molten resin.

12. The mold system equipped with a hot runner mold device for molding of an ultra-thin annular resin body according to claim 11, wherein said hot runner mold device includes super engineering plastics as the predetermined molding resin material.

13. The mold system equipped with a hot runner mold device for molding of an ultra-thin annular resin body according to claim 12, wherein in said hot runner mold device,
the predetermined metal material for a nest is an alloy having at least high thermal conductivity, and
the cavity is coated at its inner surface with a predetermined coating agent increasing hardness so as to improve flowability of the molten resin.

14. The mold system equipped with a hot runner mold device for molding of an ultra-thin annular resin body according to claim 13, wherein in said hot runner mold device for molding, the predetermined ultra-thickness range is 0.1 mm to 0.5 mm.

15. The mold system equipped with a hot runner mold device for molding of an ultra-thin annular resin body according to claim 11, wherein said hot runner mold device for molding comprises an ejector mechanism including:
a push-up member (181) accommodated displaceably in a space formed so as to oppose said fixed-side nest through said movable-side nest member in said movable-side body in a direction from the space to said movable-side nest member or in its opposite direction,
a plurality of support rods (182) extended from said push-up member toward said movable-side nest member through the space in said movable-side body, a plurality of said support rods displacing in their axial directions together with said push-up member, and
a plurality of push-up pins (183) extended at outer peripheral sides of said support rods in said movable-side body from said push-up member through the space to support the cavity at a plurality of outside portions of the cavity from below, and
wherein said movable-side nest member includes:
a movable-side outer nest (110) accommodated in the accommodating hole portion of said movable-side body; and
a movable-side inner nest (120) accommodated in an accommodating hole portion formed in said movable-side outer nest from its molding surface, said movable-side inner nest being supported by a plurality of said support rods from below.

## Patentansprüche

1. Heißkanalformvorrichtung (M) zum Formen eines ultradünnen ringförmigen Harzkörpers, aufweisend:
eine feste Form (P), die einen Körper (10, 20, 30, 40) auf der festen Seite aufweist, der aus einem vorbestimmten Formmetallmaterial gebildet ist, um einen Verteiler (40) mit einem Verteilerkörper (40a) aufzunehmen; und
eine bewegliche Form (Q), die einen Körper (80a, 90, 100) auf der beweglichen Seite aufweist, der aus dem vorbestimmten Formmetallmaterial gebildet ist, so dass eine Formfläche an einer Formfläche des Körpers auf der festen Seite anliegt,
wobei die feste Form Folgendes beinhaltet:
ein Nest (80) auf der festen Seite, das aus einem vorbestimmten Metallmaterial für ein Nest gebildet ist, wobei das Nest auf der festen Seite in einem die Formoberfläche aufnehmenden Lochabschnitt (31) untergebracht ist, der in dem Körper auf der festen Seite von seiner Formoberfläche aus gebildet ist;
einen Heißkanal (HR) mit einem in dem Verteilerkörper vorgesehenen Kanalströmungsweg (40c), in den ein vorgegebenes Formharzmaterial als geschmolzenes Harz aus einer Harzspritzgießmaschine eingespritzt wird, und eine Vielzahl von Düsen (60a bis 60h), die sich von einer Vielzahl von im. Kanalströmungsweg gebildeten Ausströmungswegabschnitten in Richtung der Formoberfläche des Körpers auf der festen Seite durch dessen Inneres erstrecken, wobei der Heißkanal zu einer Vielzahl von Düsen das geschmolzene Harz strömt, das durch den Kanalströmungsweg strömt und aus einer Vielzahl von Ausströmungswegabschnitten des Kanalströmungswegs austritt,
eine Heizung (40d), die in dem Verteilerkörper zusammen mit dem Kanaltrömungsweg vorgesehen ist, um den Verteilerkörper zu erwärmen, und
zwei Seiten-Temperaturregelplattenelemente, die beide Seiten-Temperaturregelplatten beinhalten, die auf dem Verteilerkörper von beiden Oberflächen desselben gestapelt sind, und zwei Seiten-Ölströmungskreise, die jeweils in den beiden Seiten-Temperaturregelplatten enthalten sind, wobei die beiden Seiten-Ölströmungskreise Öl bei einer Öltemperatur innerhalb eines vorbestimmten Öltemperaturbereichs strömen, der geeignet ist, die Verkohlung des geschmolzenen Harzes zu verhindern, um eine Temperatur eines Abschnitts zu steuern, der mindestens den Kanalströmungsweg des Verteilerkörpers beinhaltet, der durch die Heizung auf eine Temperatur erwärmt wird, die geeignet ist, die Verkohlung des geschmolzenen Harzes durch die beiden Seiten-Temperaturregelplatten (50a, 50b) zu verhindern,
wobei die bewegliche Form Folgendes beinhaltet:
einen Körper (80a, 90, 100) auf der beweglichen Seite, der aus einem Metallmaterial gebildet ist, und
ein Nestteil (N, 110, 120) auf der beweglichen Seite, das aus dem vorbestimmten Metallmaterial für ein Nest gebildet ist, wobei das Nest auf der beweglichen Seite in einem die Formoberfläche aufnehmenden Lochabschnitt (101) untergebracht ist, der in dem Körper auf der beweglichen Seite von seiner Formoberfläche gebildet ist, und
wobei ein Hohlraum (CV) konstruiert ist, um einen ultradünnen ringförmigen Harzkörper mit einer Dicke innerhalb eines vorbestimmten Ultradickenbereichs auf der Grundlage des geschmolzenen Harzes aus einer Vielzahl von Düsen zwischen dem Nestelement der beweglichen Seite und dem Nest der festen Seite zu formen, wenn der Körper der beweglichen Seite an seiner Formfläche an der Formfläche des Körpers der festen Seite anliegt, so dass das Nestteil der beweglichen Seite an das Nest der festen Seite anliegt.

2. Heißkanalformvorrichtung zum Formen eines ultradünnen ringförmigen Harzkörpers gemäß Anspruch 1, ferner umfassend:
eine Temperatursteuerungsvorrichtung (130, 150) auf der festen Seite zum Steuern der Temperaturen des Körpers auf der festen Seite und des Nestes auf der festen Seite auf eine vorbestimmte Temperatur auf der festen Seite;
eine Temperatursteuerungsvorrichtung (140, 160) auf der beweglichen Seite, das die Temperaturen des Körpers auf der beweglichen Seite und des Nestelements auf eine vorbestimmte Temperatur auf der beweglichen Seite steuert; und
eine Düsentemperatursteuerungsvorrichtung (70a, 70b) zum Steuern einer Temperatur, um das Verkohlen eines geschmolzenen Harzes zu verhindern, das in einer Vielzahl der Düsen fließt.

3. Heißkanal-Formvorrichtung zum Formen eines ultradünnen ringförmigen Harzkörpers gemäß Anspruch 2,
wobei der Heißkanal eine Vielzahl der Düsen als eine Vielzahl von offenen Düsen (60a bis 60h) beinhaltet, und
wobei, wenn das geschmolzene Harz aus der Harzspritzgießmaschine mit einer vorbestimmten hohen Einspritzgeschwindigkeit eingespritzt wird, das geschmolzene Harz durch den Heißkanal auf der Grundlage der vorbestimmten hohen Einspritzgeschwindigkeit fließt und in eine Vielzahl der offenen Düsen aus einer Vielzahl der Ausströmwegabschnitte davon fließt.

4. Heißkanalformvorrichtung zum Formen eines ultradünnen ringförmigen Harzkörpers gemäß Anspruch 3, wobei das vorgegebene Formharzmaterial supertechnologische Kunststoffe enthält.

5. Heißkanalformvorrichtung zum Formen eines ultradünnen ringförmigen Harzkörpers gemäß Anspruch 4,
wobei das vorbestimmte Metallmaterial für ein Nest eine Legierung mit mindestens hoher Wärmeleitfähigkeit ist, und
der Hohlraum auf seiner Innenfläche mit einem vorbestimmten Beschichtungsmittel beschichtet ist, das die Härte erhöht, um die Fließfähigkeit des geschmolzenen Harzes zu verbessern.

6. Heißkanalformvorrichtung zum Formen eines ultradünnen ringförmigen Harzkörpers gemäß Anspruch 5, wobei der vorgegebene Ultradickenbereich 0,1 mm bis 0,5 mm beträgt.

7. Heißkanalformvorrichtung zum Formen eines ultradünnen ringförmigen Harzkörpers gemäß Anspruch 1, ferner umfassend:
einen Auswerfermechanismus (180), der Folgendes beinhaltet:
ein Aufsteckelement (181), das verschiebbar in einem Raum (Qa) untergebracht ist, der so ausgebildet ist, dass er dem Nest auf der festen Seite durch das Nestteil auf der beweglichen Seite in dem Körper der beweglichen Seite in einer Richtung vom Raum zum Nestteil auf der beweglichen Seite oder in seiner entgegengesetzten Richtung gegenüberliegt,
eine Vielzahl von Stützstäben (182), die sich vom Aufsteckelement in Richtung des beweglichen Nestteils durch den Raum in dem Körper auf der beweglichen Seite erstrecken, wobei sich eine Vielzahl der Stützstäbe in ihren axialen Richtungen zusammen mit dem Aufsteckelement verschiebt, und
eine Vielzahl von Druckstiften (183), die sich an den äußeren Umfangsseiten der Stützstäbe in dem Körper der beweglichen Seite von dem Aufsteckelement durch den Raum erstrecken, um den Hohlraum an einer Vielzahl von Außenabschnitten (Ta, Tbb, Tcc, Tdd, Sa, Sb, Sc, Sd) des Hohlraums von unten zu stützen,
wobei das Nestteil auf der beweglichen Seite Folgendes beinhaltet:
ein Außennest (110) auf der beweglichen Seite, das in dem Aufnahmelochabschnitt des Körpers der beweglichen Seite untergebracht ist; und
ein Innennest auf der beweglichen Seite, das in einem Aufnahmelochabschnitt untergebracht ist, der in dem Außennest auf der beweglichen Seite aus der Formfläche Körpers auf der beweglichen Seite gebildet ist, wobei das Innennest (120) auf der beweglichen Seite durch eine Vielzahl der Stützstäbe von unten getragen ist.

8. Heißkanalformvorrichtung zum Formen eines ultradünnen ringförmigen Harzkörpers gemäß Anspruch 7, wobei der Heißkanal eine Vielzahl der Düsen als eine Vielzahl von offenen Düsen beinhaltet,
wobei, wenn ein geschmolzenes Harz aus der Harzspritzgießmaschine mit einer vorbestimmten hohen Einspritzgeschwindigkeit eingespritzt wird, der Heißkanal bewirkt, dass das geschmolzene Harz mit der vorbestimmten hohen Einspritzgeschwindigkeit in den Kanalströmungsweg fließt und aus dessen Ausströmungswegabschnitten in eine Vielzahl der offenen Düsen fließt.

9. Heißkanal-Formvorrichtung zum Formen eines ultradünnen ringförmigen Harzkörpers gemäß Anspruch 8, wobei das vorgegebene Formharzmaterial supertechnologische Kunststoffe enthält.

10. Heißkanal-Formvorrichtung zum Formen eines ultradünnen ringförmigen Harzkörpers gemäß Anspruch 9, wobei das vorbestimmte Metallmaterial für ein Nest eine Legierung mit mindestens hoher Wärmeleitfähigkeit ist,
der Hohlraum an seiner Innenfläche mit einem vorbestimmten Beschichtungsmittel beschichtet ist, das die Härte erhöht, um die Fließfähigkeit des geschmolzenen Harzes zu verbessern, und
der vorgegebene Ultra-Dickenbereich 0,1 mm bis 0,5 mm ist.

11. Formsystem, ausgestattet mit einer Heißkanal-Formvorrichtung zum Formen eines ultradünnen ringförmigen Körpers gemäß Anspruch 1,
wobei der Heißkanal eine Vielzahl der Düsen als eine Vielzahl von offenen Düsen (60a bis 60h) beinhaltet,
wobei die feste Form ferner Folgendes beinhaltet:
eine Temperatursteuereinrichtung (130, 150) auf der festen Seite zum Steuern jeder Temperatur Körpers auf der festen Seite und des Nestes auf der festen Seite auf eine vorgegebene Temperatur auf der festen Seite, und
eine Düsentemperatursteuereinrichtung (70a, 70b) zum Steuern einer Temperatur, um so das Verkohlen eines geschmolzenen Harzes zu verhindern, das in einer Vielzahl der offenen Düsen fließt,
wobei die bewegliche Form ferner Folgendes beinhaltet:
eine Temperatursteuereinrichtung (140, 160) auf der beweglichen Seite zum Steuern jeder Temperatur des Körpers auf der beweglichen Seite und des Nestelements auf der beweglichen Seite auf eine vorbestimmte Temperatur auf der beweglichen Seite, und
einen Ölumwälzer zum Zirkulieren von Öl durch die beidseitigen Ölströmungskreisläufe der beidseitigen Temperatursteuerplattenteilen der Heißkanalformvorrichtung bei einer Öltemperatur innerhalb des vorbestimmten Öltemperaturbereichs, die geeignet ist, die Verkokung des geschmolzenen Harzes zu verhindern.

12. Formsystem, das mit einer Heißkanalformvorrichtung zum Formen eines ultradünnen ringförmigen Harzkörpers gemäß Anspruch 11 ausgestattet ist, wobei die Heißkanalformvorrichtung als vorgegebenes Formmaterial supertechnologische Kunststoffe beinhaltet.

13. Formsystem, das mit einer Heißkanalformvorrichtung zum Formen eines ultradünnen ringförmigen Harzkörpers gemäß Anspruch 12 ausgestattet ist, wobei in der Heißkanalformvorrichtung das vorgegebene Metallmaterial für ein Nest eine Legierung mit mindestens hoher Wärmeleitfähigkeit ist, und
der Hohlraum an seiner Innenfläche mit einem vorbestimmten Beschichtungsmittel beschichtet ist, das die Härte erhöht, um die Fließfähigkeit des geschmolzenen Harzes zu verbessern.

14. Formsystem, das mit einer Heißkanalformvorrichtung zum Formen eines ultradünnen ringförmigen Harzkörpers gemäß Anspruch 13 ausgestattet ist, wobei in der Heißkanalformvorrichtung zum Formen der vorgegebene Ultra-Dickenbereich 0,1 mm bis 0,5 mm beträgt.

15. Formsystem, das mit einer Heißkanalformvorrichtung zum Formen eines ultradünnen ringförmigen Harzkörpers gemäß Anspruch 11 ausgestattet ist, wobei die Heißkanalformvorrichtung zum Formen einen Auswerfmechanismus umfasst, der Folgendes beinhaltet:
ein Aufsteckelement (181), das verschiebbar in einem Raum untergebracht ist, der so ausgebildet ist, dass es dem Nestteil auf der festen Seite durch das Nestteil auf der beweglichen Seite in einer Richtung aus dem Raum zu dem Nestteil auf der beweglichen Seite oder in seiner entgegengesetzten Richtung gegenüberliegt,
eine Vielzahl von Stützstäben (182), die sich vom Aufsteckelement in Richtung des beweglichen Nestelements durch den Raum in dem Körper auf der beweglichen Seite erstrecken, wobei sich eine Vielzahl der Stützstäbe in ihren axialen Richtungen zusammen mit dem Aufsteckelement verschiebt, und
eine Vielzahl von Druckstiften (183), die sich an den äußeren Umfangsseiten der Stützstäbe in dem Körper der beweglichen Seite vom Aufsteckelement durch den Raum erstrecken, um den Hohlraum an einer Vielzahl von Außenabschnitten des Hohlraums von unten zu stützen, und
wobei das Nest-Element auf der beweglichen Seite Folgendes beinhaltet:
ein Außennest (110) auf der beweglichen Seite, das in dem Aufnahmelochabschnitt des Körpers auf der beweglichen Seite untergebracht ist; und
ein Innennest (120) auf der beweglichen Seite, das in einem Aufnahmelochabschnitt untergebracht ist, der in dem Außennest auf der beweglichen Seite von seiner Formfläche aus gebildet ist, wobei das Innennest auf der beweglichen Seite durch eine Vielzahl der Stützstäbe von unten getragen wird.

## Revendications

1. Dispositif à moules à canaux chauffés (M) pour un moulage d'un corps en résine annulaire ultramince, comprenant :
un moule fixe (P) incluant un corps côté fixe (10, 20, 30, 40) formé à partir d'un matériau métallique de moule prédéterminé de façon à inclure un collecteur (40) ayant un corps de collecteur (40a) ; et
un moule mobile (Q) incluant un corps côté mobile (80a, 90, 100) formé à partir du matériau métallique de moule prédéterminé de façon à avoir une surface de moulage venant buter contre une surface de moulage dudit corps côté fixe,
dans lequel ledit moule fixe inclut :
une empreinte côté fixe (80) formée d'un matériau métallique prédéterminé pour une empreinte, ladite empreinte côté fixe étant reçue dans une partie trou de réception côté surface de moulage (31) formée dans ledit corps côté fixe à partir de sa surface de moulage ;
un canal de carotte chauffé (HR) incluant un trajet d'écoulement de canal d'alimentation (40c) prévu dans ledit corps de collecteur et auquel un matériau de résine de moulage prédéterminé est injecté comme une résine fondue à partir d'une machine de moulage par injection de résine, et une pluralité de buses (60a à 60h) s'étendant à partir d'une pluralité de parties de trajet d'évacuation formées dans ledit trajet d'écoulement de canal d'alimentation vers la surface de moulage dudit corps côté fixe à travers l'intérieur de celui-ci, ledit canal de carotte chauffé faisant s'écouler vers une pluralité desdites buses la résine fondue s'écoulant à travers ledit trajet d'écoulement de canal d'alimentation et s'écoulant hors d'une pluralité des parties de trajet d'évacuation dudit trajet d'écoulement de canal d'alimentation,
un dispositif de chauffage (40d) prévu dans ledit corps de collecteur conjointement avec ledit trajet d'écoulement de canal d'alimentation pour chauffer ledit corps de collecteur, et
des éléments à plaques de régulation thermique des deux côtés incluant des plaques de régulation thermique des deux côtés empilées sur ledit corps de collecteur à partir des deux surfaces de celui-ci, et des circuits d'écoulement d'huile des deux côtés inclus respectivement dans lesdites plaques de régulation thermique des deux côtés, lesdits circuits d'écoulement d'huile des deux côtés faisant s'écouler de l'huile à une température d'huile à l'intérieur d'une plage de températures d'huile prédéterminée appropriée pour empêcher une carbonisation de la résine fondue pour réguler une température d'une partie incluant au moins ledit trajet d'écoulement de canal d'alimentation dudit corps de collecteur chauffé par ledit dispositif de chauffage à une température appropriée pour empêcher la carbonisation de la résine fondue par l'intermédiaire desdites plaques de régulation thermique des deux côtés (50a, 50b),
dans lequel ledit moule mobile inclut :
un corps côté mobile (80a, 90, 100) formé d'un matériau métallique, et
un élément empreinte côté mobile (N, 110, 120) formé du matériau métallique prédéterminé pour une empreinte, ledit élément empreinte côté mobile étant reçu dans une partie trou de réception côté surface de moulage (101) formée dans ledit corps côté mobile à partir de sa surface de moulage, et
dans lequel une cavité (CV) est construite pour mouler un corps en résine annulaire ultramince à une épaisseur à l'intérieur d'une plage d'ultra-épaisseurs prédéterminée sur une base de la résine fondue à partir d'une pluralité desdites buses entre ledit élément empreinte côté mobile et ladite empreinte côté fixe, lorsque ledit corps côté mobile vient buter au niveau de sa surface de moulage contre la surface de moulage dudit corps côté fixe de façon à ce que ledit élément empreinte côté mobile vienne buter contre ladite empreinte côté fixe.

2. Dispositif à moules à canaux chauffés pour un moulage d'un corps en résine annulaire ultramince selon la revendication 1, comprenant en outre :
un moyen de régulation thermique côté fixe (130, 150) permettant de réguler des températures dudit corps côté fixe et de ladite empreinte côté fixe jusqu'à une température côté fixe prédéterminée ;
un moyen de régulation thermique côté mobile (140, 160) régulant des températures dudit corps côté mobile et dudit élément empreinte côté mobile jusqu'à une température côté mobile prédéterminée ; et
un moyen de régulation thermique de buses (70a, 70b) permettant de réguler une température de façon à empêcher une carbonisation d'une résine fondue s'écoulant dans une pluralité desdites buses.

3. Dispositif à moules à canaux chauffés pour un moulage d'un corps en résine annulaire ultramince selon la revendication 2,
dans lequel ledit canal de carotte chauffé inclut une pluralité desdites buses comme une pluralité de buses ouvertes (60a à 60h), et
dans lequel lorsque la résine fondue est injectée à partir de la machine de moulage par injection de résine à une vitesse d'injection élevée prédéterminée, la résine fondue s'écoule à travers ledit canal de carotte chauffé sur une base de la vitesse d'injection élevée prédéterminée et s'écoule dans une pluralité desdites buses ouvertes à partir d'une pluralité des parties de trajet d'évacuation de celui-ci.

4. Dispositif à moules à canaux chauffés pour un moulage d'un corps en résine annulaire ultramince selon la revendication 3, dans lequel le matériau de résine de moulage prédéterminé contient des plastiques de haute technologie.

5. Dispositif à moules à canaux chauffés pour un moulage d'un corps en résine annulaire ultramince selon la revendication 4,
dans lequel le matériau métallique prédéterminé pour une empreinte est un alliage ayant au moins une conductibilité thermique élevée, et
ladite cavité est revêtue sur sa surface intérieure d'un agent de revêtement prédéterminé augmentant une dureté de façon à améliorer une coulabilité de la résine fondue.

6. Dispositif à moules à canaux chauffés pour un moulage d'un corps en résine annulaire ultramince selon la revendication 5, dans lequel la plage d'ultra-épaisseurs prédéterminée est de 0,1 mm à 0,5 mm.

7. Dispositif à moules à canaux chauffés pour un moulage d'un corps en résine annulaire ultramince selon la revendication 1, comprenant en outre :
un mécanisme d'éjection (180) incluant :
un élément de poussée (181) reçu de manière déplaçable dans un espace (Qa) formé de façon à être opposé à ladite empreinte côté fixe à travers ledit élément empreinte côté mobile dans ledit corps côté mobile dans une direction à partir de l'espace jusqu'audit élément empreinte côté mobile ou dans sa direction opposée,
une pluralité de tiges de support (182) étendues à partir dudit élément de poussée vers ledit élément empreinte côté mobile à travers l'espace dans ledit corps côté mobile, une pluralité desdites tiges de support se déplaçant dans leurs directions axiales conjointement avec ledit élément de poussée, et
une pluralité de goupilles de poussée (183) étendues au niveau de côtés périphériques extérieurs desdites tiges de support dans ledit corps côté mobile à partir dudit élément de poussée à travers l'espace pour porter la cavité au niveau d'une pluralité de parties externes (Ta, Tbb, Tcc, Tdd, Sa, Sb, Sc, Sd) de la cavité à partir d'en dessous,
dans lequel ledit élément empreinte côté mobile inclut :
une empreinte extérieure côté mobile (110) reçue dans la partie trou de réception dudit corps côté mobile ; et
une empreinte intérieure côté mobile reçue dans une partie trou de réception formée dans ladite empreinte extérieure côté mobile à partir de la surface de moulage dudit corps côté mobile, ladite empreinte intérieure côté mobile (120) étant portée par une pluralité desdites tiges de support à partir d'en dessous.

8. Dispositif à moules à canaux chauffés pour un moulage d'un corps en résine annulaire ultramince selon la revendication 7, dans lequel ledit canal de carotte chauffé inclut une pluralité desdites buses comme une pluralité de buses ouvertes,
dans lequel lorsqu'une résine fondue est injectée à partir de la machine de moulage par injection de résine à une vitesse d'injection élevée prédéterminée, ledit canal de carotte chauffé amène la résine fondue à s'écouler dans le trajet d'écoulement de canal d'alimentation à la vitesse d'injection élevée prédéterminée et à s'écouler à partir des parties de trajet d'évacuation de celui-ci dans une pluralité desdites buses ouvertes.

9. Dispositif à moules à canaux chauffés pour un moulage d'un corps en résine annulaire ultramince selon la revendication 8, dans lequel le matériau de résine de moulage prédéterminé contient des plastiques de haute technologie.

10. Dispositif à moules à canaux chauffés pour un moulage d'un corps en résine annulaire ultramince selon la revendication 9, dans lequel le matériau métallique prédéterminé pour une empreinte est un alliage ayant au moins une conductibilité thermique élevée,
la cavité est revêtue au niveau de sa surface intérieure d'un agent de revêtement prédéterminé augmentant une dureté de façon à améliorer une coulabilité de la résine fondue, et
la plage d'ultra-épaisseurs prédéterminée est de 0,1 mm à 0,5 mm.

11. Système de moulage équipé d'un dispositif à moules à canaux chauffés pour un moulage d'un corps annulaire ultramince selon la revendication 1,
dans lequel ledit canal de carotte chauffé inclut une pluralité desdites buses comme une pluralité de buses ouvertes (60a à 60h),
dans lequel ledit moule fixe inclut en outre :
un moyen de régulation thermique côté fixe (130, 150) permettant de réguler chaque température dudit corps côté fixe et de ladite empreinte côté fixe jusqu'à une température côté fixe prédéterminée, et
un moyen de régulation thermique de buses (70a, 70b) permettant de réguler une température de façon à empêcher une carbonisation d'une résine fondue s'écoulant dans une pluralité desdites buses ouvertes,
dans lequel ledit moule mobile inclut en outre :
un moyen de régulation thermique côté mobile (140, 160) permettant de réguler chaque température dudit corps côté mobile et dudit élément empreinte côté mobile jusqu'à une température côté mobile prédéterminée, et
un circulateur d'huile permettant de faire circuler de l'huile à travers lesdits circuits d'écoulement d'huile des deux côtés desdits éléments à plaques de régulation thermique des deux côtés dudit dispositif à moules à canaux chauffés à une température d'huile à l'intérieur de la plage de températures d'huile prédéterminée appropriée pour empêcher la carbonisation de la résine fondue.

12. Système de moulage équipé d'un dispositif à moules à canaux chauffés pour un moulage d'un corps en résine annulaire ultramince selon la revendication 11, dans lequel ledit dispositif à moules à canaux chauffés inclut des plastiques de haute technologie comme matériau de résine de moulage prédéterminé.

13. Système de moulage équipé d'un dispositif à moules à canaux chauffés pour un moulage d'un corps en résine annulaire ultramince selon la revendication 12, dans lequel dans ledit dispositif à moules à canaux chauffés,
le matériau métallique prédéterminé pour une empreinte est un alliage ayant au moins une conductibilité thermique élevée, et
la cavité est revêtue au niveau de sa surface intérieure d'un agent de revêtement prédéterminé augmentant une dureté de façon à améliorer une coulabilité de la résine fondue.

14. Système de moulage équipé d'un dispositif à moules à canaux chauffés pour un moulage d'un corps en résine annulaire ultramince selon la revendication 13, dans lequel dans ledit dispositif à moules à canaux chauffés pour un moulage, la plage d'ultra-épaisseurs prédéterminée est de 0,1 mm à 0,5 mm.

15. Système de moulage équipé d'un dispositif à moules à canaux chauffés pour un moulage d'un corps en résine annulaire ultramince selon la revendication 11, dans lequel ledit dispositif à moules à canaux chauffés pour un moulage comprend un mécanisme d'éjection incluant :
un élément de poussée (181) reçu de manière déplaçable dans un espace formé de façon à être opposé à ladite empreinte côté fixe à travers ledit élément empreinte côté mobile dans ledit corps côté mobile dans une direction à partir de l'espace jusqu'audit élément empreinte côté mobile ou dans sa direction opposée,
une pluralité de tiges de support (182) étendues à partir dudit élément de poussée vers ledit élément empreinte côté mobile à travers l'espace dans ledit corps côté mobile, une pluralité desdites tiges de support se déplaçant dans leurs directions axiales conjointement avec ledit élément de poussée, et
une pluralité de goupilles de poussée (183) étendues au niveau de côtés périphériques extérieurs desdites tiges de support dans ledit corps côté mobile à partir dudit élément de poussée à travers l'espace pour porter la cavité au niveau d'une pluralité de parties externes de la cavité à partir d'en dessous, et
dans lequel ledit élément empreinte côté mobile inclut :
une empreinte extérieure côté mobile (110) reçue dans la partie trou de réception dudit corps côté mobile ; et
une empreinte intérieure côté mobile (120) reçue dans une partie trou de réception formée dans ladite empreinte extérieure côté mobile à partir de sa surface de moulage, ladite empreinte intérieure côté mobile étant portée par une pluralité desdites tiges de support à partir d'en dessous.
